# EUROPÄISCHE PATENTSCHRIFT

(11) **EP 2 838 748 B1**
(45) Veröffentlichungstag und Bekanntmachung des Hinweises auf die Patenterteilung: **30.03.2016**
(21) Anmeldenummer: 13721275.9
(22) Anmeldetag: 10.04.2013
(51) Int. Cl.: B60K 11/08

(54) **STELLANTRIEB EINER LUFTDURCHLASSVORRICHTUNG UND VERFAHREN ZUR STEUERUNG EINES STELLANTRIEBS**
ACTUATING DRIVE OF AN AIR PASSAGE SHUTTER DEVICE AND METHOD OF CONTROLLING AN ACTUATING DRIVE
ACTIONNEUR D'UN DISPOSITIF DE RÉGLAGE D'UN PASSAGE D'AIR ET PROCÉDÉ DE COMMANDE D'UN ACTIONNEUR

(30) Priorität: 19.04.2012 DE 102012103464
(43) Veröffentlichungstag der Anmeldung: 25.02.2015
(73) Patentinhaber: Brose Fahrzeugteile GmbH & Co. Kommanditgesellschaft, Hallstadt, 96103 Hallstadt (DE)
(72) Erfinder: BÜHLER, Matthias, 96103 Hallstadt (DE); WEINGÄRTNER, Thomas, 96117 Memmelsdorf (DE); KLIPPERT, Uwe, 96472 Rödental (DE); SOMMER, Uwe, 96528 Elfelder (DE); MIJAC, Anto, 96052 Bamberg (DE)
(74) Vertreter: Maikowski & Ninnemann
(86) Internationale Anmeldenummer: PCT/EP2013/057462
(87) Internationale Veröffentlichungsnummer: WO 2013/156364

(56) Entgegenhaltungen:
- EP-A2- 2 248 693
- DE-A1-102005 040 290
- DE-A1-102011 100 582
- US-A1- 2012 074 729

## Beschreibung

Die vorliegende Erfindung betrifft einen Stellantrieb einer Luftdurchlassvorrichtung für eine Motorkühlung eines Fahrzeugs nach dem Oberbegriff des Anspruchs 1 sowie ein Verfahren zur Steuerung eines solchen Stellantriebs nach dem Oberbegriff des Anspruchs 14.

Ein derartiger Stellantrieb umfasst einen Antriebsmotor zur Verstellung der Luftdurchlassvorrichtung zwischen einer offenen Stellung, in der die Luftdurchlassvorrichtung zum Durchlassen eines Luftstroms maximal geöffnet ist und einer geschlossenen Stellung, in der die Luftdurchlassvorrichtung zum Minimieren eines Luftstroms geschlossen ist. Eine solche Luftdurchlassvorrichtung kann beispielsweise vorne am Fahrzeug angeordnet sein und einen Luftstrom in einen Motorraum des Fahrzeugs steuern. Hierzu kann die Luftdurchlassvorrichtung beispielsweise Schließelemente nach Art von Lamellen aufweisen, die verstellt werden können, um den Strömungsquerschnitt für den Luftstrom zu verändern und auf diese Weise einen Luftstrom zum Kühlen eines Motors im Motorraum einzustellen.

Der Antriebsmotor, üblicherweise in Form eines Elektromotors, wird dabei von einer elektronischen Steuereinheit gesteuert, in der Betriebsparameter für einen ersten Betriebsmodus des Antriebsmotors hinterlegt sind, wie z. B. Höhe und Verlauf eines dem Antriebsmotor zuzuführenden Motorstroms oder einer Drehzahl des Antriebsmotors für eine bestimmungsgemäße Verstellung der Luftdurchlassvorrichtung zwischen der offenen und der geschlossenen Stellung. Über eine derartige elektronische Steuereinheit kann hierbei insbesondere eine Regelung einer Antriebswelle erfolgen, so dass diese während einer Verstellung der Luftdurchlassvorrichtung mit einer vorgegebenen Drehzahl bewegt wird oder über diese ein konstantes Drehmoment bereitgestellt ist.
In einem Normalbetrieb des Stellantriebs und der Luftdurchlassvorrichtung steuert die Steuereinheit beispielsweise in Abhängigkeit von Steuersignalen einer übergeordneten Steuerungseinrichtung eine Verstellposition der Luftdurchlassvorrichtung. Hierbei wird insbesondere in Abhängigkeit von einer Temperatur innerhalb des Motorraums eine Verstellung der Luftdurchlassvorrichtung veranlasst, wofür an die Steuereinheit übermittelte Steuersignale in eine Verstellung der Luftdurchlassvorrichtung gemäß den in der Steuereinheit hinterlegten Betriebsparametern umgesetzt werden.
Im Betrieb der Luftdurchlassvorrichtung können erfahrungsgemäß unterschiedliche Betriebszustände und insbesondere Fehlfunktionen auftreten, die die Funktionssicherheit und die Lebensdauer des Stellantriebs und der Luftdurchlassvorrichtung insgesamt gefährden.

In der älteren, nachveröffentlichten DE 10 2011 007 523 ist ein Stellantrieb für eine Luftdurchlassvorrichtung beschrieben, die aus diesem Grund eine Sicherungsfunktion (so genannte "Fail-safe"-Funktion) bereitstellt, durch die auch bei einem Ausfall einer Stromversorgung für den Stellantrieb sichergestellt ist, dass die Luftdurchlassvorrichtung nicht dauerhaft in der (vollständig) geschlossenen Stellung verharrt. Auf diese Weise ist stets gewährleistet, dass auch bei einem Ausfall einer Energieversorgung für den Stellantrieb ein kühlender Luftstrom ins Innere des Motorraums gelangen kann.
Bei dem in der DE 10 2011 007 523 beschriebenen Stellantrieb ist eine mechanische Sicherungsfunktion dadurch bereitgestellt, dass ein von dem Antriebsmotor unmittelbar angetriebenes Antriebselement von einem Abtriebselement entkoppelt werden kann, das für eine bestimmungsgemäße Verstellung der Luftdurchlassvorrichtung über den Antriebsmotor mit dem Antriebselement zusammenwirkt. Hierbei kann es jedoch vorkommen, dass eine solche Entkopplung von Antriebselement und Abtriebselement unerwünscht erfolgt, also der vorgesehene "Fail-safe"-Mechanismus unerwünscht auslöst. Dies kann beispielsweise durch äußere Störeinflüsse, wie z. B. durch während einer Fahrt auftretende Vibrationen oder Spannungseinbrüche beim Kaltstart verursacht sein.

Bleibt eine Entkopplung des Antriebselements von dem Abtriebselement jedoch unerkannt, verbleibt die Luftdurchlassvorrichtung stets in einer zumindest teilweise geöffneten Verstellposition. Ein erneutes Koppeln des Antriebselements mit dem Abtriebselement, also ein Wiedereinkuppeln des Verstellmechanismus des Stellantriebs, erfolgt nicht automatisch, sondern muss gezielt herbeigeführt werden, bei dem Stellantrieb der DE 10 2011 007 523 beispielsweise durch Verstellung der Luftdurchlassvorrichtung in die offene (End-) Stellung.

Ein Stellantrieb nach dem Oberbegriff des Anspruchs 1 und ein Verfahren nach dem Oberbegriff des Anspruchs 14 sind aus der DE 10 2011 100 582 A1 bekannt

Es ist wünschenswert, einen Betriebszustand einer Luftdurchlassvorrichtung zu erkennen, bei dem unter Umständen eine funktionelle Beeinträchtigung der Luftdurchlassvorrichtung vorliegt und eine Verstellung der Luftdurchlassvorrichtung auf Basis der in der Steuereinheit hinterlegten Betriebsparameter nicht optimal ist.
Zudem besteht der Wunsch, eine über den Antriebsmotor des Stellantriebs angetriebene Verstellbewegung einer Luftdurchlassvorrichtung möglichst einfach an die jeweiligen Betriebsbedingungen anpassen zu können, da diese je nach Einbausituation und infolge der zugelassenen mechanischen Toleranzen variieren können.
Es ist daher Aufgabe der vorliegenden Erfindung, einen verbesserten Stellantrieb für eine Luftdurchlassvorrichtung für eine Fahrzeug-Motorkühlung bereitzustellen, die die zuvor angesprochenen Nachteile überwindet oder zumindest minimiert.
Diese Aufgabe wird erfindungsgemäß mit einem Stellantrieb gemäß dem Anspruch 1 sowie einem Verfahren zur Steuerung eines Stellantriebs gemäß dem Anspruch 14 gelöst.
Bei einem erfindungsgemäßen Stellantrieb ist eine Steuereinheit dazu eingerichtet und vorgesehen,
- mindestens eine Betriebsgröße des Antriebsmotors, wie z. B. die Stärke eines von dem Antriebsmotor aufgenommen elektrischen Stroms (Motorstrom), die Höhe einer Versorgungsspannung oder die Drehzahl einer von dem Antriebsmotor angetriebenen Antriebswelle, während einer Verstellung der Luftdurchlassvorrichtung zu erfassen und dahingehend auszuwerten, ob ein Betriebszustand der Luftdurchlassvorrichtung vorliegt, bei dem das Abtriebselement mit dem Antriebselement nicht gekoppelt ist, und
- bei Vorliegen dieses Betriebszustands den Antriebsmotor für zumindest eine nachfolgende Verstellung der Luftdurchlassvorrichtung in mindestens einem weiteren Betriebsmodus zu betreiben, in dem zu einem ersten Betriebsmodus des Antriebsmotors unterschiedliche Betriebsparameter zur Steuerung des Antriebsmotors vorgesehen sind.

Grundsätzlich wird es als besonders vorteilhaft erachtet, wenn die Steuereinheit dazu eingerichtet und vorgesehen ist, während einer Verstellung der Luftdurchlassvorrichtung durch den Antriebsmotor etwaige Lastschwankungen anhand einer Drehzahl des Antriebsmotors und/oder der Stärke des von dem Antriebsmotor aufgenommen Motorstroms zu erfassen und mittels einer in der Steuereinheit hinterlegten Auswertelogik diese als das Auftreten unterschiedlicher Betriebszustände zu bewerten. Wird das Vorliegen eines bestimmten Betriebszustands festgestellt, gibt die Steuereinheit dem Antriebsmotor dauerhaft oder zumindest zeitweise neue Betriebsparameter vor, die an den festgestellten Betriebszustand angepasst sind.

Die vorliegende Erfindung geht dabei von dem Gedanken aus, dass die Erkennung eines Betriebszustands der Luftdurchlassvorrichtung anhand einer Betriebsgröße des Antriebsmotors während einer ausgelösten Verstellung der Luftdurchlassvorrichtung erfolgen kann und hierfür nicht zwingend zusätzliche Schalter oder Sensoren an der Luftdurchlassvorrichtung selbst vorgesehen werden müssen. Unter einer Betriebsgröße des Antriebsmotors wird dabei eine (elektronisch) messbare Größe verstanden, die ein Maß für die von dem Antriebsmotor während einer Verstellung der Luftdurchlassvorrichtung bereitgestellte Verstellkraft ist, wie z.B. ein Motorstrom, eine Drehzahl oder eine angelegte Versorgungsspannung. So kann der Verlauf bereits einer während des Betriebs des Antriebsmotors ermittelten Betriebsgröße Aufschluss darüber geben, ob das Abtriebselement mit dem Antriebselement nicht mehr gekoppelt ist. Darüber hinaus ist anhand des Verlaufs einer Betriebsgröße oder mehrerer Betriebsgrößen feststellbar, ob beispielsweise eine Fehlfunktion der Luftdurchlassvorrichtung oder ihres Stellantriebs vorliegt oder die Verstellung der Luftdurchlassvorrichtung insbesondere im Hinblick auf eine Geräuschentwicklung, Verschleiß, Verstellgeschwindigkeit und/oder Leistungsaufnahme optimiert werden kann.

Hier setzt die vorliegende Erfindung an und sieht vor, dass die Steuereinheit des Stellantriebs nach Ermittlung eines bestimmten Betriebszustandes, der dadurch charakterisiert sein kann, dass die erfasste Betriebsgröße einen vorgegebenen Grenzwert über- oder unterschreitet oder ein erfasster (zeitlicher) Verlauf der Betriebsgröße von einem vorgegebenen Soll-Verlauf (übermäßig) abweicht, in einen anderen Betriebsmodus wechselt. In diesem anderen Betriebsmodus wird der Antriebsmotor mit zu dem vorangegangenen Betriebsmodus verschiedenen Betriebsparametern betrieben. Beispielsweise werden dem Antriebsmotor Betriebsparameter vorgegeben, die die Luftdurchlassvorrichtung zu einer Verstellung in die entgegengesetzte Verstellrichtung veranlassen, den Antriebsmotor augenblicklich stoppen und/oder einen anderen Verlauf einer Verstellgeschwindigkeit der Luftdurchlassvorrichtung für eine nachfolgende Verstellung oder mehrere nachfolgende Verstellungen vorgeben. Demgemäß werden unter von der Steuereinheit vorgebbaren Betriebsparametern für den Antriebsmotor Parameter verstanden, mittels denen die Verstellkraft und Verstellgeschwindigkeit des Antriebsmotors während einer auszuführenden Verstellung der Luftdurchlassvorrichtung gesteuert werden und ihnen ein definierter Verlauf vorgegeben wird.

In diesem Zusammenhang kann vorgesehen sein, dass die Steuereinheit zusätzlich dazu eingerichtet und vorgesehen ist, nach Ermittlung eines bestimmten Betriebszustandes den Antriebsmotor für die Verstellung der Luftdurchlassvorrichtung dauerhaft mit geänderten Betriebsparametern zu betreiben. Wird hier anhand der mindestens einen erfassten Betriebsgröße des Antriebsmotors während einer Verstellung der Luftdurchlassvorrichtung das Vorliegen eines bestimmten Betriebszustands erkannt, werden für nachfolgende Verstellungen der Luftdurchlassvorrichtung neue Betriebsparameter durch die Steuereinheit vorgegeben, so dass der Antriebsmotor dauerhaft in dem geänderten Betriebsmodus betrieben wird. Hierunter wird insbesondere verstanden, dass die Steuereinheit anhand der mindestens einen erfassten Betriebsgröße des Antriebsmotors, wie z. B. der Drehzahl oder dem Motorstrom, nach der Montage des Stellantriebs das erstmalige Erreichen der offenen und/oder der geschlossenen Stellung der Luftdurchlassvorrichtung jeweils als einen (unkritischen) Betriebszustand erkennt, bei dem die Luftdurchlassvorrichtung nicht weiter verstellbar ist, und die Betriebsparameter für den Antriebsmotor so verändert werden, dass
- eine Geschwindigkeit des Antriebsmotors in einem letzten Abschnitt eines vorgegebenen Stellwegs, bevor die Luftdurchlassvorrichtung die offene oder geschlossene Stellung erreicht, kontinuierlich reduziert wird,
- die Beschleunigung bei einer Verstellung der Luftdurchlassvorrichtung aus der offenen oder geschlossenen Stellung heraus reduziert wird und/oder
- die maximale Geschwindigkeit der Verstellung der Luftdurchlassvorrichtung zwischen der offenen und geschlossenen Stellung erhöht wird.

Die Steuereinheit erkennt hier folglich anhand der mindestens einen erfassten Betriebsgröße, nach welchem zurückgelegten Stellweg eine Endstellung der Luftdurchlassvorrichtung erreicht ist, indem sich die erfasste Betriebsgröße in charakteristischer Weise ändert, z. B. stark ansteigt oder abfällt. So ist das Erreichen einer Endposition der Luftdurchlassvorrichtung üblicherweise an einem charakteristischen Anstieg des Motorstroms oder einem abrupten Abfall der Drehzahl der Antriebswelle des Antriebsmotors feststellbar. Nachdem die Steuereinheit hierüber die Endposition bzw. die Endpositionen der Luftdurchlassvorrichtung "gelernt" hat, werden die Betriebsparameter des Antriebsmotors hieran angepasst, so dass eine Verstellbewegung der Luftdurchlassvorrichtung vor Erreichen der jeweiligen Endposition über die Steuereinheit abgebremst wird.

Alternativ oder ergänzend hierzu ist eine Ausführungsvariante vorgesehen, den Antriebsmotor zumindest zeitweise mit zu dem ersten Betriebsmodus unterschiedlichen Betriebsparametern zu betreiben. So kann vorgesehen sein, dass die Steuereinheit in einen anderen Betriebsmodus wechselt, um auf eine festgestellte Fehlfunktion, als einem möglichen Betriebszustand der Luftdurchlassvorrichtung, zu reagieren.

Dabei kann in der Steuereinheit ein Soll-Verlauf für die mindestens eine Betriebsgröße hinterlegt und die Steuereinheit dazu eingerichtet und vorgesehen sein, auszuwerten, ob während einer Verstellung der Luftdurchlassvorrichtung eine Abweichung von dem für die Betriebsgröße hinterlegten Soll-Verlauf auftritt. Über- oder unterschreiten die erfassten Werte für die Betriebsgröße den hinterlegten Soll-Verlauf um einen zulässigen Toleranzwert, wird dies als Fehlfunktion der Luftdurchlassvorrichtung gewertet und die Steuereinheit veranlasst die Luftdurchlassvorrichtung zu einer korrigierenden Verstellbewegung und/oder schaltet zumindest in einen Betriebsmodus, in dem die Luftdurchlassvorrichtung eventuell beschädigende Verstellbewegungen verhindert. Wurde beispielsweise anhand einer charakteristischen Abweichung von einem vorgegebenen Soll-Verlauf durch die Steuereinheit festgestellt, dass die Luftdurchlassvorrichtung möglicherweise verklemmt oder sogar blockiert ist, wechselt die Steuereinheit in einen Betriebsmodus, in dem eine Verstellung in die Verstellrichtung, in der die Verklemmung bzw. Blockierung detektiert wurde, erfolgte um mechanische Beschädigungen der Luftdurchlassvorrichtung zu vermeiden.

Unter der Ermittlung eines Betriebszustandes durch die Steuereinheit wird folglich verstanden, dass die Steuereinheit erkennt, dass eine Veränderung der Verstellbewegung der Luftdurchlassvorrichtung aufgetreten ist, während diese durch den Antriebsmotor verstellt wird. Dies schließt vorliegend nicht nur die Erkennung unkritischer Betriebszustände, wie das Erreichen einer Endstellung der Luftdurchlassvorrichtung ein, sondern auch die Erkennung kritischer Betriebszustände bei etwaigen Fehlfunktionen. In Reaktion auf die Erkennung eines neuen oder veränderten Betriebszustands der Luftdurchlassvorrichtung ist die Steuereinheit erfindungsgemäß dazu in der Lage, den Antriebsmotor mit anderen Betriebsparametern zu betreiben, d. h., den Antriebsmotor abweichend von einem bisherigen Normalbetrieb zu betreiben. Dies schließt sowohl die dauerhafte Änderung der Betriebsparameter für den Normalbetrieb und damit insbesondere die Vorgabe einer geänderten Verstellgeschwindigkeit für eine Verstellung zwischen den beiden möglichen Endstellungen der Luftdurchlassvorrichtung entlang eines zugelassenen Stellwegs als auch die automatische Auslösung mindestens einer (nachfolgenden) Verstellbewegung zur Behebung eines ermittelten und als kritisch bewerteten Betriebszustandes ein.

So kann die Steuereinheit beispielsweise dazu ausgebildet und eingerichtet sein, in Abhängigkeit von dem ermittelten Betriebszustand in einen anderen Betriebsmodus zu wechseln, indem ein von dem Antriebsmotor erzeugtes Antriebsmoment (zeitlich begrenzt) gezielt, d.h. um einen vorgegebenen Betrag, erhöht ist. Hierdurch können etwaige Schwergängigkeiten im Verstellmechanismus der Luftdurchlassvorrichtung überwunden werden.

Ferner kann in einem anderen Betriebsmodus eine Verstellbewegung der Luftdurchlassvorrichtung gestoppt und eine Verstellung der Luftdurchlassvorrichtung mittels des Antriebsmotors zumindest teilweise blockiert werden, insbesondere obwohl die Steuereinheit von einer übergeordneten Steuerungseinrichtung Steuersignale zur Verstellung der Luftdurchlassvorrichtung erhält. Auf diese Weise kann beispielsweise ein (wiederholtes) Öffnen oder Schließen der Luftdurchlassvorrichtung zumindest zeitweise durch die elektronische Steuereinheit des Stellantriebs verhindert sein, obwohl eine übergeordnete Steuerungseinrichtung dies in Reaktion auf eine gemessene Innentemperatur des Motorraums anfordert, da bei einer zuvor durchgeführten Verstellbewegung eine Fehlfunktion der Luftdurchlassvorrichtung erkannt wurde, und eine neuerliche Verstellung der Luftdurchlassvorrichtung unter Umständen zu dauerhaften Beschädigungen führen würde.

Auch kann vorgesehen sein, dass durch den Wechsel in einen anderen Betriebsmodus eine Verstellung der Luftdurchlassvorrichtung in Richtung der offenen oder geschlossenen Stellung gestoppt und mittels des Antriebsmotors die Luftdurchlassvorrichtung automatisch in die entgegengesetzte Verstellrichtung verstellt wird. Durch ein solches Reversieren der Verstellung kann nach Ermittlung eines kritischen Betriebszustands, bei dem anhand des gemessenen Verlauf der mindestens einen ausgewerteten Betriebsgröße auf ein im Stellweg der Luftdurchlassvorrichtung (oder genauer im Stellweg ihrer Schließelemente) befindliches Hindernis geschlossen wird, eine mechanischen Beschädigung vermieden werden.
Ebenso kann vorgesehen sein, dass in einem anderen Betriebsmodus die Luftdurchlassvorrichtung mittels des Antriebsmotors automatisch in die offene Stellung verstellt wird, in der die Luftdurchlassvorrichtung maximal geöffnet ist. Hierdurch kann beispielsweise erreicht werden, dass bei dem Stellantrieb eine erneute Kopplung zwischen einem Antriebselement und einem Abtriebselement des Stellantriebs erfolgt, nachdem ein (unerwünschtes) Entkoppeln der beiden Elemente stattgefunden hat, also ein "Fail-safe"-Mechanismus des Stellantriebs ausgelöst hat. So zeigt eine erfasste Betriebsgröße des Antriebsmotors, wie z. B. eine Drehzahl oder ein von dem Antriebsmotor aufgenommener Motorstrom, einen von dem Normalbetrieb (im ersten Betriebsmodus) abweichenden Verlauf während einer Verstellung der Luftdurchlassvorrichtung, wenn das Antriebselement und das Abtriebselement des Stellantriebs nicht miteinander gekoppelt sind. Da eine derartige Abweichung von einem hinterlegten Soll-Verlauf stets in demselben Abschnitt eines zugelassenen Stellweges auftritt, ist bereits anhand einer einzigen erfassten Betriebsgröße des Antriebsmotors eine zuverlässige Bewertung möglich, ob ein Betriebszustand vorliegt, in dem das Antriebselement und das Abtriebselement des Stellantriebs nicht (mehr) miteinander gekoppelt sind.
In einer Weiterbildung der vorliegenden Erfindung ist die Steuereinheit darüber hinaus mit einem Temperatursensor gekoppelt und dazu ausgebildet und eingerichtet, für die Ermittlung, ob ein bestimmter Betriebszustand vorliegt, und/oder für die Steuerung einer nachfolgenden Verstellung der Luftdurchlassvorrichtung zusätzlich eine durch den Temperatursensor gemessene Temperatur auszuwerten.
Die Steuereinheit kann hierbei insbesondere auswerten, ob ein vorgegebener Temperatur-Grenzwert durch die von dem Temperatursensor gemessene Temperatur unter- und/oder überschritten ist. Dies ist beispielsweise sinnvoll, um erkennen zu können, ob eine festgestellte Abweichung der mindestens einen erfassten Betriebsgröße von einem vorgegebenen Soll-Verlauf während einer Verstellung der Luftdurchlassvorrichtung temperaturbedingt aufgetreten ist. So kann insbesondere bei einer Außentemperatur unterhalb des Gefrierpunktes und einer etwaigen, als Vorliegen eines kritischen Betriebszustands zu bewertenden Schwergängigkeit während einer Verstellung der Luftdurchlassvorrichtung darauf geschlossen werden, dass eine Vereisung innerhalb des Stellantriebs oder an Schließelementen der Luftdurchlassvorrichtung vorliegt. Eine Verstellung der Luftdurchlassvorrichtung kann dann beispielsweise durch die Steuereinheit erst wieder freigegeben werden, sofern ein Anstieg der gemessenen Temperatur - eventuell über eine vorgegebene Zeitdauer - über den Gefrierpunkt oder über eine vorgegebene Temperatur-Untergrenze festgestellt wird, so dass von einem Wegfall der Vereisung ausgegangen werden kann. Hierbei wird eine gemessene Temperatur während der Verstellung der Luftdurchlassvorrichtung zusammen mit mindestens einer Betriebsgröße des Antriebs, wie zum Beispiel dem Motorstrom, der Drehzahl oder der Versorgungsspannung, ausgewertet, um auf eine eventuelle Vereisung zu schließen.

Unter diesem Gesichtspunkt ist auch ein Stellantrieb für eine Luftdurchlassvorrichtung für eine Motorkühlung eines Fahrzeugs denkbar, der grundsätzlich ohne die Ermittlung eines Betriebszustands auskommt, bei dem eine Entkopplung von einem Antriebselement und einem Abtriebselement des Antriebs aufgetreten ist.

Ein solcher Stellantrieb würde demgemäß das Folgende aufweisen:
- einen Antriebsmotor zur Verstellung der Luftdurchlassvorrichtung zwischen einer offenen Stellung, in der die Luftdurchlassvorrichtung zum Durchlassen eines Luftstroms maximal geöffnet ist, und einer geschlossenen Stellung, in der die Luftdurchlassvorrichtung zum Minimieren eines Luftstroms geschlossen ist, und
- einen Steuereinheit zur Steuerung des Antriebsmotors, in der Betriebsparameter für einen ersten Betriebsmodus des Antriebsmotors hinterlegt sind, um die Luftdurchlassvorrichtung bestimmungsgemäß zwischen der offenen und geschlossenen Stellung zu verstellen,
wobei die Steuereinheit dazu eingerichtet und vorgesehen ist,
- mindestens eine Betriebsgröße des Antriebsmotors während einer Verstellung der Luftdurchlassvorrichtung zu erfassen und dahin gehend auswerten, ob ein bestimmter Betriebszustand der Luftdurchlassvorrichtung vorliegt, und
- bei Vorliegen eines bestimmten Betriebszustands den Antriebsmotor für zumindest eine nachfolgende Verstellung der Luftdurchlassvorrichtung in mindestens einem weiteren Betriebsmodus zu betreiben, in dem zu dem ersten Betriebsmodus unterschiedliche Betriebsparameter zur Steuerung des Antriebsmotors vorgesehen sind,
wobei ferner
- in der Steuereinheit ein Soll-Verlauf für die mindestens eine Betriebsgröße bei einer Verstellung der Luftdurchlassvorrichtung in dem ersten Betriebsmodus hinterlegt ist und die Steuereinheit dazu eingerichtet und vorgesehen ist, auszuwerten, ob eine Abweichung von dem für die Betriebsgröße hinterlegten Soll-Verlauf aufgetreten ist, und
- die Steuereinheit mit einem Temperatursensor gekoppelt und ergänzend dazu ausgebildet und eingerichtet ist, für die Ermittlung, ob ein bestimmter Betriebszustand vorliegt, zusätzlich eine durch den Temperatursensor gemessene Temperatur auszuwerten, um zu erkennen, ob eine festgestellte Abweichung der mindestens einen erfassten Betriebsgröße von einem vorgegebenen Soll-Verlauf während einer Verstellung der Luftdurchlassvorrichtung temperaturbedingt aufgetreten ist.

In einer Ausführungsvariante wird es vorteilhaft erachtet, dass die Steuereinheit dazu eingerichtet und vorgesehen ist, zu erkennen, ob
- bei einem Verstellen der Luftdurchlassvorrichtung in Richtung der geschlossenen Stellung und vor Erreichen einer Endposition eine erhöhte Last auftritt, die auf ein Hindernis oder auf ein Mechanikproblem innerhalb der Luftdurchlassvorrichtung hindeutet,
- eine Last vor Erreichen einer der beiden Endpositionen ansteigt und eine (Außen-) Temperatur unter dem Gefrierpunkt liegt, um auf eine Vereisung zu schließen,
- eine abrupte Blockierung der Luftdurchlassvorrichtung auftritt, z. B. messbar durch ein nicht ausregelbaren und schnellen Einbruch der Drehzahl, um auf das Erreichen einer Endposition zu schließen,
- eine Last dauerhaft unerwartet gering ist, um auf etwaige Mechanikprobleme, z. B. ein defektes Getriebe oder einen Bruch innerhalb des Stellantriebs, zu schließen,
- ob eine Last beim Verstellen der Luftdurchlassvorrichtung in Richtung der offenen Stellung langsam in einem bestimmten Bereich entlang des zulässigen Verstellwegs in charakteristischer Weise ansteigt und anschließend wieder steil abfällt, um auf ein (unerwünschtes) Auslösen eines Sicherungsmechanismus ("Fail-Safe"-Mechanismus) zu schließen.
- während einer Verstellung der Luftdurchlassvorrichtung auftretende Lastschwankungen innerhalb vorgegebener Toleranzen liegen, um diese als Windlasten oder normale Lastschwankungen aufgrund gegebener Mechaniktoleranzen zu klassifizieren.

Zusätzlich zu einem Stellantrieb einer Luftdurchlassvorrichtung für eine Motorkühlung eines Fahrzeugs ist ein Verfahren zur elektronischen Steuerung eines Antriebsmotors eines derartigen Stellantriebs Gegenstand der vorliegenden Erfindung.

Demgemäß zeichnet sich ein erfindungsgemäßes Verfahren nach dem Anspruch 14 dadurch aus, dass
- mindestens eine Betriebsgröße des Antriebsmotors, wie z. B. eine Drehzahl und/oder die Stärke eines von dem Antriebsmotor aufgenommen Stroms (Motorstroms), während einer Verstellung der Luftdurchlassvorrichtung in einem ersten Betriebsmodus erfasst und dahingehend ausgewertet wird, ob ein Betriebszustand der Luftdurchlassvorrichtung vorliegt, bei dem das Abtriebselement mit dem Antriebselement nicht gekoppelt ist, und
- bei Vorliegen dieses Betriebszustands der Antriebsmotor für zumindest eine nachfolgende Verstellung der Luftdurchlassvorrichtung in mindestens einem weiteren Betriebsmodus betrieben wird, in dem zu dem ersten Betriebsmodus unterschiedliche Betriebsparameter zur Steuerung des Antriebsmotors vorgesehen sind.

Die zuvor dargelegten und nachfolgend noch erläuterten vorteilhaften Ausführungsvarianten und Merkmale des Stellantriebs gelten damit sinngemäß auch für ein erfindungsgemäßes Steuerungsverfahren und umgekehrt.

Weitere Vorteile und Merkmale der vorliegenden Erfindung werden hierbei bei der nachfolgenden Beschreibung von Ausführungsbeispielen anhand der Figuren deutlich werden.

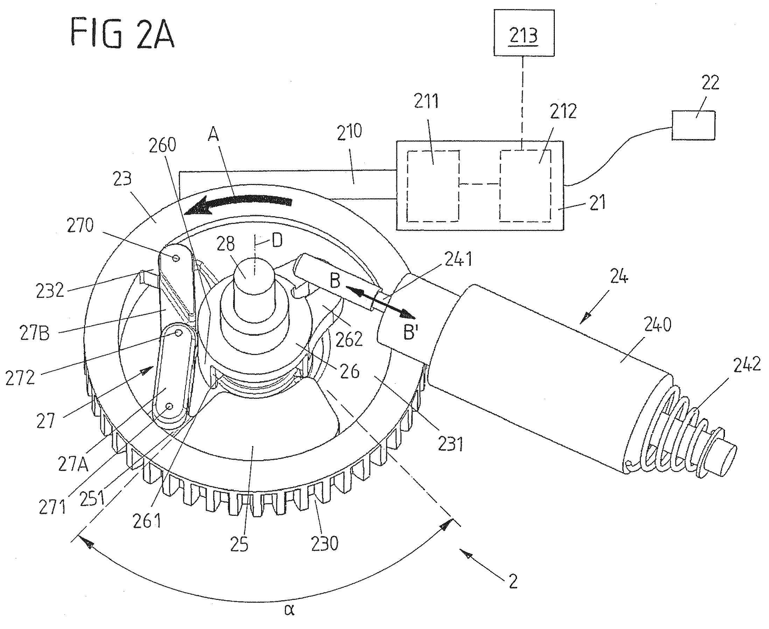

Es zeigen:
- Fig. 1: eine schematische Ansicht eines Fahrzeugs mit einer vorne am Fahrzeug angeordneten Luftdurchlassvorrichtung;
- Fig. 2A-2D: Ansichten eines Stellantriebs einer Luftdurchlassvorrichtung in unterschiedlichen Betriebszuständen und bei unterschiedlichen Verstellpositionen der Luftdurchlassvorrichtung;
- Fig. 3A: Soll-Verläufe unterschiedlicher Betriebsgrößen eines Antriebsmotors des Stellantriebs aufgetragen über die Zeit während einer Verstellung der Luftdurchlassvorrichtung zwischen einer offenen und einer geschlossenen Stellung;
- Fig. 3B: Ist-Verläufe der Betriebsgrößen aus der Figur 3A mit detektierbarer Abweichung vom Soll-Verlauf bei einer Verstellung der Luftdurchlassvorrichtung in die offene Stellung und Vorliegen eines als kritisch eingestuften Betriebszustands;
- Fig. 4A: alternativer Soll-Verlauf unterschiedlicher Betriebsgrößen des Antriebsmotors bei Verstellung einer Luftdurchlassvorrichtung zwischen einer offenen und einer geschlossenen Stellung;
- Fig. 4B: Ist-Verlauf der Betriebsgrößen der Figur 4A mit detektierbarer Abweichung vom Soll-Verlauf bei einer Verstellung der Luftdurchlassvorrichtung aus der geschlossenen Stellung in Richtung der offenen Stellung und Vorliegen eines als kritisch eingestuften Betriebszustands;
- Fig. 4C: Ist-Verlauf der Betriebsgrößen der Figur 4A mit anderer detektierbarer Abweichung bei Verstellung der Luftdurchlassvorrichtung von der offenen Stellung in Richtung der geschlossenen Stellung und Vorliegen eines weiteren als kritisch eingestuften Betriebszustands;
- Fig. 5: Verläufe unterschiedlicher Betriebsgrößen des Antriebsmotors während aufeinanderfolgender Verstellungen einer Luftdurchlassvorrichtung in unterschiedlichen durch eine elektronische Steuereinheit vorgegebenen Betriebsmodi des Antriebsmotors.

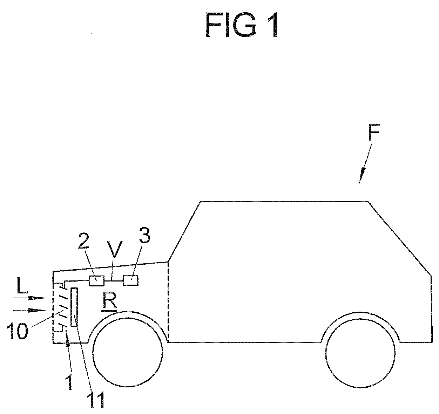

Fig. 1 zeigt in einer schematischen Ansicht ein Fahrzeug F, das eine in einem Motorraum R im vorderen Bereich des Fahrzeugs F angeordnete Luftdurchlassvorrichtung 1 aufweist.
Die Luftdurchlassvorrichtung 1, die an der vorderen Stirnseite des Fahrzeugs F im Bereich eines Kühlergrills angeordnet ist, dient zum Steuern eines Luftstroms L in den Motorraum R zum Kühlen eines in dem Motorraum R angeordneten Motors. Die Luftdurchlassvorrichtung 1 weist hierzu eine Anzahl von verstellbaren Lamellen 10 auf, die in einer geöffneten Stellung der Luftdurchlassvorrichtung 1 einen großen Strömungsquerschnitt für den Luftstrom L in den Motorraum R des Fahrzeugs F bereitstellen und zum Verkleinern des Strömungsquerschnitts verstellt werden können.
In Strömungsrichtung hinter den Lamellen 10 ist ein Lüfter 11 zum Ansaugen des Luftstroms L angeordnet.
Auf die Lamellen 10 wirkt ein Stellantrieb 2 ein, der mit einem elektrischen Energieversorgungssystem 3 des Fahrzeugs F verbunden ist. Der elektromotorische Stellantrieb 2 dient zum Verstellen der Lamellen 10 zum Verändern des Strömungsquerschnitts der Luftdurchlassvorrichtung 1 und wird elektrisch über das Energieversorgungssystem des Fahrzeugs versorgt, das hierzu eine Spannung V bereitstellt, über die eine elektromotorische Antriebsvorrichtung des Stellantriebs 2 betrieben werden kann.
Ein Ausführungsbeispiel eines solchen Stellantriebs 2 ist in Fig. 2A bis 2D in unterschiedlichen Ansichten und Betriebszuständen dargestellt. Der grundlegende Aufbau eines Stellantriebs 2 gemäß den Fig. 2A bis 2D sowie seine Funktionsweise ist auch in der älteren, nachveröffentlichten DE 10 2011 007 523 beschrieben.

Der Stellantrieb 2 weist, wie schematisch in Fig. 2A dargestellt, eine elektromotorische Antriebsvorrichtung 21 auf, die über einen Stecker 22 mit dem Energieversorgungssystem 3 (siehe Fig. 1) des Fahrzeugs F verbunden ist. Die Antriebsvorrichtung 21 weist einen Antriebsmotor 211 in Form eines Elektromotors, eine elektronische Steuereinheit 212 und eine drehbare Antriebswelle 210 auf, die mit einem um eine Drehachse D drehbaren, über eine Welle 28 gelagerten Antriebselement in Form eines Antriebsrad 23 kämmend in Eingriff steht. An der Antriebswelle 210 ist hierzu eine Antriebsschnecke ausgebildet, die in eine Außenverzahnung 230 des als Stirnrad ausgebildeten Antriebsrads 23 eingreift.
Der Stellantrieb 2 weist ein Abtriebselement 25 auf, das an dem Antriebsrad 23 entlang einer Umfangrichtung um die Drehachse D verschiebbar gelagert und hierzu an einer Gleitfläche 231 des Antriebsrads 23 angeordnet ist.
Das Abtriebselement 25 ist über ein Übertragungselement 27 in Form eines Knickhebels mit dem Antriebsrad 23 gekoppelt. Das Übertragungselement 27 ist gebildet durch zwei Hebel 27A, 27B, von denen der eine Hebel 27B über eine Gelenkstelle 270 mit dem Antriebsrad 23 und der andere Hebel 27A über eine Gelenkstelle 271 mit einer Befestigungsstelle 251 des Abtriebselements 25 gelenkig gekoppelt ist. Die Hebel 27A. 27B sind ihrerseits über ein Gelenk 272 gelenkig miteinander verbunden, so dass sich der Knickhebel ergibt, der eine Relativbewegung zwischen dem Antriebsrad 23 und dem Abtriebselement 25 zulässt, wenn die Hebel 27A, 27B relativ zueinander verschwenken können.
Das Abtriebselement 25 ist mit Lamellen 10 der Luftdurchlassvorrichtung 1 gekoppelt und verstellt diese zwischen einer offenen Stellung, in der ein Luftstrom L durch die Luftdurchlassvorrichtung 1 treten kann, und einer geschlossenen Stellung, in der ein Luftstrom L weitestgehend unterbunden ist (vgl. Fig. 1). Das Abtriebselement 25 kann hierzu, angetrieben durch das Antriebsrad 23, entlang eines Verstellwegs α entsprechend einem Winkelbereich von ca. 90° verstellt werden, um auf diese Weise eine Stellkraft und eine Stellbewegung auf die Lamellen 10 der Luftdurchlassvorrichtung 1 zu übertragen, wobei ein Stellwinkel von 0° (vgl. Fig. 2A) einer maximal geöffneten Stellung der Luftdurchlassvorrichtung 1 und ein Stellwinkel von ca. 90° einer maximal geschlossenen Stellung der Luftdurchlassvorrichtung 1 entspricht.

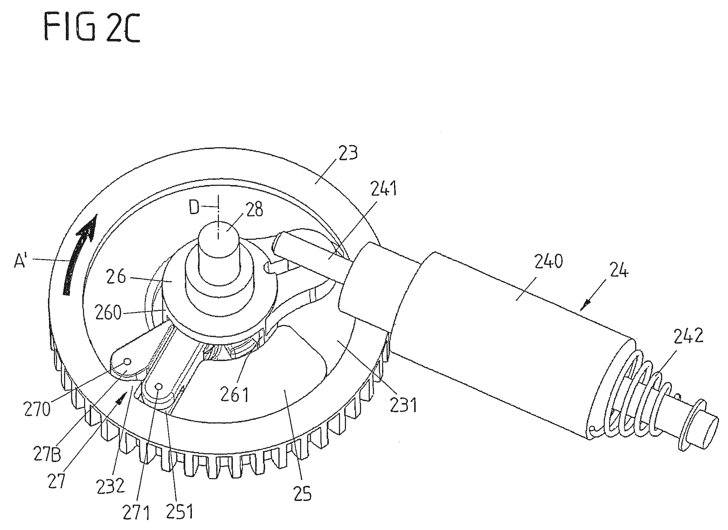

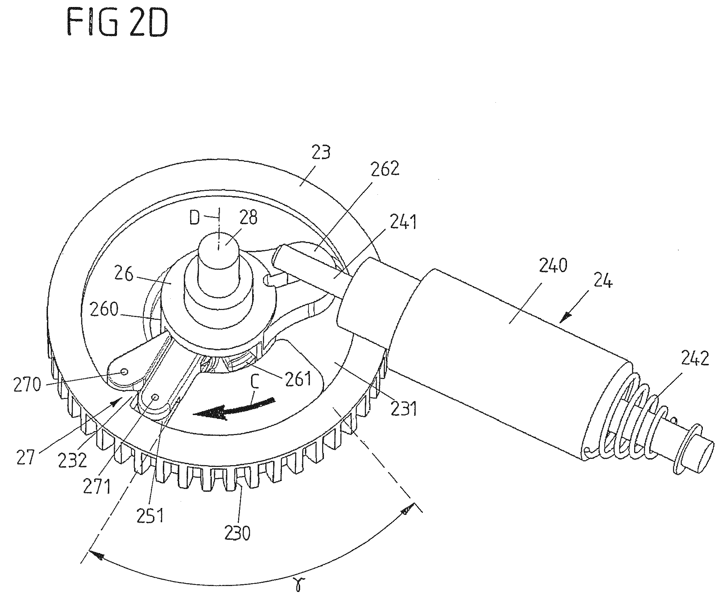

An der Welle 28 des Antriebsrads 23 ist ein Stellelement 26 angeordnet, das um die Drehachse D relativ zu dem Antriebsrad 23 und dem Abtriebselement 25 verschwenkbar ist. Das Stellelement 26 weist eine kreiszylindrische Grundform mit einer zylindrischen, umfänglichen Mantelfläche 260 auf, die umfänglich abschnittsweise durch eine Aussparung 261 unterbrochen ist. An dem Stellelement 26 greift über ein Hebelelement 262 eine Betätigungsstange 241 eines Aktuators 24 an, der zum Stellen des Stellelements 26 dient und hierzu einen Elektrohubmagneten 240 aufweist, der auf die Betätigungsstange 241 einwirkt. Die Betätigungsstange 241 ist über eine Feder 242 in Richtung einer eingefahrenen Stellung vorgespannt, entsprechend der in Fig. 2A dargestellten Stellung der Betätigungsstange 241.
Der Aktuator 22 dient im Zusammenwirken mit dem Stellelement 26 zum Steuern des Übertragungselements 27 und damit zum Einstellen der Kupplung zwischen dem Antriebsrad 23 und dem Abtriebselement 25. Insbesondere ist das Stellelement 26 mit seiner zylindrischen Mantelfläche 260 und der daran angeordneten Aussparung 261 ausgebildet, abhängig von der Stellung des Stellelements 26 und abhängig von der Stellung des Abtriebselements 25 entlang seines Verstellwegs α das Übertragungselement 27 für eine Kraftübertragung zwischen dem Antriebsrad 23 und dem Abtriebselement 25 abzustützen, wie dies in Fig. 2A dargestellt ist, oder eine Relativbewegung zwischen dem Abtriebselement 25 und dem Antriebsrad 23 zum Bereitstellen einer Sicherungsfunktion zuzulassen, wie dies nachfolgend insbesondere anhand von Fig. 2C und 2D veranschaulicht ist.
In einem Normalbetrieb, in dem der Antriebsmotor 211 über die Steuereinheit 212 in einem (ersten) Betriebsmodus auf Basis in der Steuereinheit 212 hinterlegter Betriebsparameter betrieben wird, wird über die Antriebsvorrichtung 21 das Antriebsrad 23 und zusammen mit dem Antriebsrad 23 das Abtriebselement 25 zum Verstellen der Luftdurchlassvorrichtung 1 entlang einer Verdrehrichtung A und entlang des Verstellwegs α verstellt.
Wird zunächst, ausgehend von der Stellung gemäß Fig. 2A, das Antriebsrad 23 in Richtung der Verdrehrichtung A bewegt, so wird die in das Antriebsrad 23 eingeleitete Stellkraft über das Übertragungselement 27 in das Abtriebselement 25 eingeleitet und das Abtriebselement in starrer Weise zusammen mit dem Antriebsrad 23 bewegt. Hierzu wird das Gelenk 272 des Übertragungselements 27 an der zylindrischen Mantelfläche 260 des Stellelements 26 abgestützt, so dass ein Einknicken des Übertragungselements 27 in Form des Knickhebels nicht möglich ist und damit das Abtriebselement 25 über das

Übertragungselement 27 direkt mit dem Antriebsrad 23 gekoppelt ist. Dadurch, dass der Hebel 27B des Übertragungselements 27 zusätzlich über einen keilförmigen, radial nach innen vorspringenden Vorsprung 232 an dem Antriebsrad 23 auch gegen ein Verknicken in eine vom Stellelement 26 weg weisende Richtung festgelegt ist, ist das Übertragungselement 27 arretiert, so dass die Hebel 27A, 27B sich nicht relativ zueinander bewegen können und die starre Verbindung des Antriebsrads 23 mit dem Abtriebselement 25 herstellen.

Der Aktuator 24 ist, wie in Fig. 2A dargestellt, bei einer Stellbewegung ausgehend von einer maximalen geöffneten Stellung der Luftdurchlassvorrichtung 1 zunächst nicht bestromt, um den hierfür ansonsten erforderlichen Energieaufwand zu sparen. Der Aktuator 24 ist dabei im Normalbetrieb solange nicht bestromt, wie das Abtriebselement 25 sich in einem Bereich des Verstellwegs α befindet, in dem das Übertragungselement 27 mit seinem Gelenk 272 an der zylindrischen Mantelfläche 260 des Stellelements 26 abgestützt ist.

Wird das Antriebsrad 23 in die Verdrehrichtung A bewegt, so wird das Abtriebselement 25 mitbewegt. Weil sich dabei das Gelenk 272 der Aussparung 261 in der zylindrischen Mantelfläche 260 des Stellelements 26 annähert, wird der Aktuator 24 bestromt und die Betätigungsstange 241 in eine Richtung B ausgefahren, so dass das Stellelement 26 in eine Stellung gelangt, in der das Gelenk 272 des Übertragungselements 27 entlang des gesamten Verstellwegs α an der Mantelfläche 260 des Stellelements 26 abgestützt ist.

Aufgrund der Abstützung an dem Stellelement 26 ist das Abtriebselement 25 im Normalbetrieb somit entlang des gesamten Verstellwegs α direkt mit dem Antriebsrad 23 gekoppelt und wird mit dem Antriebsrad 23 entlang der Verdrehrichtung A bewegt.

Zum elektromotorisch angetriebenen Rückstellen der Luftdurchlassvorrichtung 1 wird das Antriebsrad 23, angetrieben durch die Antriebsvorrichtung 21, entgegen der Verdrehrichtung A zurückbewegt, und das Abtriebselement 25 wird zusammen mit dem Antriebsrad 23 entsprechend zurückverstellt. Hierfür wird der Antriebsmotor 211 ebenfalls von der Steuereinheit 212 auf Basis von für den eingestellten (ersten) Betriebsmodus hinterlegten Betriebsparameter betrieben und angesteuert.

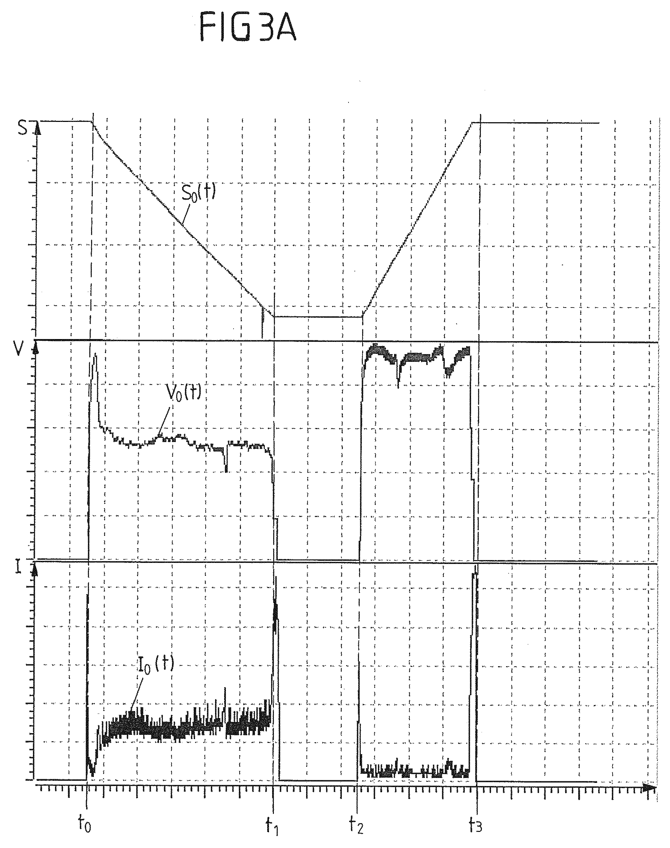

Der Aktuator 24 verstellt das Stellelement 26 grundsätzlich in Abhängigkeit von einer Spannung V, die dem Stellantrieb 2 über das Energieversorgungssystem 3 des Fahrzeugs F bereitgestellt wird. Liegt am Stellantrieb 2 eine hinreichende Spannung V an, so wird der Aktuator 24 bestromt (es sei denn, das Abtriebselement 25 befindet sich in einer Position, die der geöffneten Luftdurchlassvorrichtung 1 entspricht, vgl. Fig. 2A). Liegt am Stellantrieb 2 keine hinreichende Spannung V an, so wird der Aktuator 24 nicht bestromt, und die Betätigungsstange 241 wird in eine Richtung B' eingefahren, wie dies in Fig. 3A gezeigt ist. Auf diese Weise bewirkt der Aktuator 24 zur Bereitstellung einer Sicherungsfunktion ("Fail-Safe"-Funktion) eine Entkopplung des Abtriebselements 25 von dem Antriebsrad 23, wenn ein Ausfall einer hinreichenden elektrischen Versorgung des Stellantriebs 2 detektiert wird, beispielsweise weil die Spannung V unter einen vorbestimmten Grenzwert gefallen ist, und zudem ein Öffnen der Luftdurchlassvorrichtung 1 erforderlich ist, weil sich die Luftdurchlassvorrichtung 1 mit ihren Lamellen 10 in einer geschlossenen oder nahezu geschlossenen Stellung befindet. In diesem Fall soll eine Relativbewegung des Abtriebselements 25 relativ zu dem Antriebsrad 23 ermöglicht werden, um die Lamellen 10, beispielsweise unter Wirkung einer geeigneten Federvorspannung, selbsttätig in eine geöffnete Stellung zurückzuführen, um einen Luftstrom L zur Kühlung eines zu kühlenden Motors im Motorraum R (siehe Fig. 1) des Fahrzeugs F zu gewährleisten, auch wenn die elektrische Versorgung des Stellantriebs 2 ausgefallen ist. Der Stellantrieb 2 liegt hierbei folglich in einem Betriebszustand vor, in dem das Antriebsrad 23 nicht (mehr) mit dem Abtriebselement 25 gekoppelt ist.

Eine Entkopplung des Abtriebselements 25 von dem Antriebsrad 23 ist hierbei erforderlich, weil der Stellantrieb 2 bei geschlossenem Kraftübertragungsstrang zwischen der Antriebsvorrichtung 21 mit dem Abtriebselement 25 selbsthemmend sein kann, so dass ein Rückstellen ohne Betätigung der Antriebsvorrichtung 21 nicht oder nur sehr schwer möglich ist. Eine solche Selbsthemmung kann beispielsweise über den Eingriff der Antriebswelle 210 in das Antriebsrad 23 oder über ein zwischen der Antriebsvorrichtung 210 und dem Antriebsrad 23 angeordnetes, zusätzliches Getriebe bewirkt sein.

Fällt die durch das Energieversorgungssystem 3 bereitgestellte Spannung V ab, beispielsweise weil das Energieversorgungssystem insgesamt ausgefallen ist oder die elektrische Verbindung zwischen dem Energieversorgungssystem 3 und dem Stellantrieb 2 beeinträchtigt ist, so wird der Elektrohubmagnet 240 des Aktuators 24 nicht (mehr) bestromt und die Betätigungsstange 241 - aufgrund der vorspannenden Feder 242 - in eine eingefahrene Stellung verstellt. Zusammen mit der Betätigungsstange 241 wird auch das über das Hebelelement 262 mit der Betätigungsstange 241 gekoppelte Stellelement 26 verschwenkt.

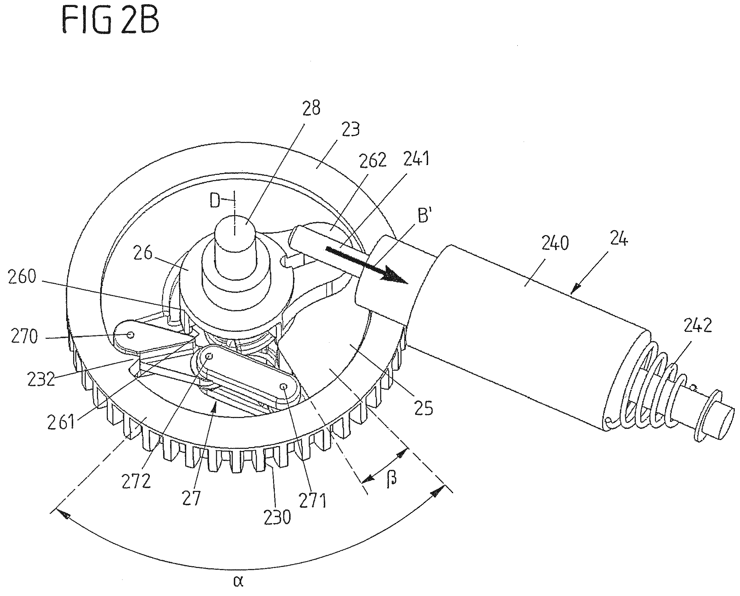

Befindet sich das Abtriebselement 25, wie in Fig. 3A dargestellt, bei Ausfall der elektrischen Versorgung und somit einem damit einhergehenden Spannungsabfall in einem Abschnitt β des Verstellwegs α (siehe Fig. 2B), der einer geschlossenen oder nahezu geschlossenen Stellung der Luftdurchlassvorrichtung 1 entspricht, so gelangt das Gelenk 272 des Übertragungselements 27 in den Bereich der Aussparung 261 an der zylindrischen Mantelfläche 260 des Stellelements 26, wenn das Stellelement 26 durch Einfahren der Betätigungsstange 241 verstellt wird. Das Gelenk 272 liegt somit nicht mehr an der zylindrischen Mantelfläche 260 des Stellelements 26 an und wird damit nicht mehr radial durch das Stellelement 26 abgestützt.

Vielmehr kann das Übertragungselement 27 mit seinem Gelenk 272, wie in Fig. 2C und 2D dargestellt, in die Aussparung 261 des Stellelements 26 eintauchen, so dass eine Bewegung in eine Richtung C des Abtriebselements 25 relativ zum Antriebsrad 23 erfolgen kann und das Abtriebselement 25 somit bei feststehendem Antriebsrad 23 bewegt werden kann. Auf diese Weise kann das Abtriebselement 25 in die Richtung C verstellt werden, um die Lamellen 10 der Luftdurchlassvorrichtung 1 in eine geöffnete Stellung der Luftdurchlassvorrichtung 1 zu überführen und somit einen Luftstrom L durch die Luftdurchlassvorrichtung 1 zu ermöglichen.

Wie aus Fig. 2C ersichtlich, ist das Abtriebselement 25 um einen maximalen Rückstellweg γ gegenüber dem Antriebsrad 23 bewegbar, der kleiner als der Verstellweg α im Normalbetrieb des Stellantriebs 2 ist. Durch die Relativbewegung zwischen dem Abtriebselement 25 und dem Antriebsrad 23 kann somit die Luftdurchlassvorrichtung 1 in eine zumindest weitestgehend geöffnete Stellung bei weitestgehend geöffneten Lamellen 10 überführt werden.

In der Figur 3A sind Soll-Verläufe zweier erfasster Betriebsgrößen des Antriebsmotors 211 während einer Verstellung der Luftdurchlassvorrichtung 1 von einer offenen Stellung zu einer geschlossenen Stellung und während einer nachfolgenden Verstellung von der geschlossenen in die offene Stellung aufgetragen. Als von der Steuereinheit 212 erfasste und ausgewertete Betriebsgrößen sind hier eine Drehzahl v der Antriebswelle und ein von dem Antriebsmotor 211 aufgenommener Motorstrom I über die Zeit t aufgetragen. Darüber hinaus ist in einem Weg-Zeit-Diagramm ein Stellweg s der Antriebswelle 210 über die Zeit t aufgetragen. Hierbei zeigt eine abfallende Gerade eine Drehung der Antriebswelle 210 in eine Verstellrichtung an, in der die Luftdurchlassvorrichtung 1 geschlossen wird, während eine ansteigend Gerade ein Öffnen der Luftdurchlassvorrichtung 1 repräsentiert.

Im Normalbetrieb steuert die Steuereinheit 212 den Antriebsmotor 211 in einem ersten Betriebsmodus, so dass sich die in der Figur 3A ersichtlichen Soll-Verläufe s₀(t), v₀(t) und l₀(t) bei einer Verstellung der Luftdurchlassvorrichtung zwischen der geschlossenen und der offenen Stellung ergeben - gegebenenfalls mit geringfügigen Abweichungen aufgrund der zugelassenen mechanischen Toleranzen und des Verschleißes. In den Diagrammen der Figur 3A eingetragene Zeitpunkte t₀, t₁, t₂ und t₃ geben jeweils die Zeitpunkte an, an denen die Luftdurchlassvorrichtung 1 eine jeweilige Endposition erreicht. So liegt die Luftdurchlassvorrichtung 1 zu den Zeitpunkten t₀ und t₃ jeweils in der offenen Stellung vor, in der die Luftdurchlassvorrichtung maximal geöffnet ist. Zu den Zeitpunkten t₁ und t₂ befindet sich die Luftdurchlassvorrichtung 1 demgegenüber in der geschlossenen Stellung.

Im Normalbetrieb des Stellantriebs 2 liegen die von der Steuereinheit 212 erfassten Betriebsgrößen, hier die Drehzahl v und/oder der Motorstrom I, innerhalb eines vorgegebenen Toleranzbereiches entlang des in der Steuereinheit 212 hinterlegten jeweiligen Sollverlaufs v₀ und l₀ für die erfasste Betriebsgröße.

Die vorliegende Erfindung geht nunmehr von dem Gedanken aus, dass anhand der Auswertung einer derartigen erfassten Betriebsgröße - gegebenenfalls ohne zusätzliche Sensoren an der Luftdurchlassvorrichtung 1 und innerhalb ihres Stellantriebs 2 - festgestellt werden kann, ob ein Betriebszustand der Luftdurchlassvorrichtung 1 vorliegt, der einen geänderten Betrieb des Stellantriebs 2 notwendig macht.

So kann es bei einem Stellantrieb 2 durch äußere Einflüsse, wie Erschütterungen, Spannungseinbrüchen oder etwaigen mechanischen Defekten dazu kommen, dass eine Entkopplung des Antriebsrads 23 von dem Abtriebselement 25 auftritt, also der "Failsafe"-Mechanismus ausgelöst wird, und dies mangels Sensoren innerhalb des Stellantriebs 2 nicht erkannt wurde. Die Hebel 27A und 27B des Übertragungselements 27 können demgemäß entsprechend den Figuren 2C und 2D teilweise in die Aussparung 261 der Mantelfläche 260 des Stellelements 26 eintauchen, so dass das Abtriebselement 25 relativ zum dem Antriebsrad 23 beweglich ist und ein Verstellung des Antriebsrads 23 über den Antriebsmotor 211 in die Verdrehrichtung A unter Umständen nicht unmittelbar zu einer Drehung des Abtriebselements 25 führt.

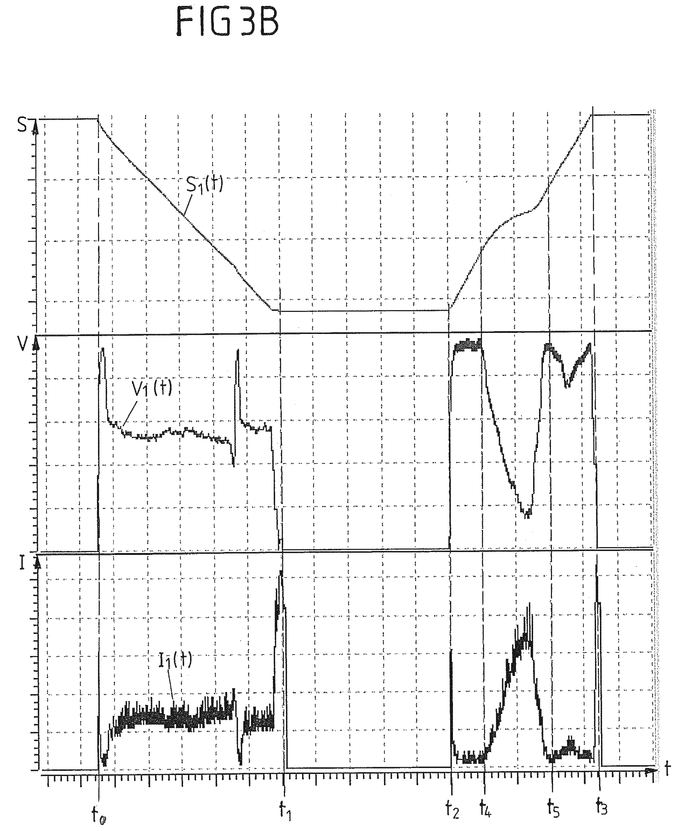

Die Figur 3B zeigt beispielhaft gemessene Ist-Verläufe v₁ und l₁ für die Drehzahl v und den Motorstrom l bei Verstellung der Luftdurchlassvorrichtung 1 aus der offenen in die geschlossene Stellung und zurück, wenn eine (unerwünschte) Auslösung der Sicherungsfunktion des Stellantriebs 2 aufgetreten ist. Hier zeigt sich bei der Verstellung von der geschlossenen in die offene Stellung (Zeitintervall t₂-t₃) eine Abweichung von den in der Figur 3A wiedergegebenen Soll-Verläufen, bei denen von einem fehlerfreien Betrieb der Luftdurchlassvorrichtung 1 ausgegangen wird. So tritt hier entlang des zurückgelegten Stellwegs ein kurzzeitiger Einbruch der Drehzahl v und anschließender Anstieg der Drehzahl v auf sowie ein damit korrespondierender Anstieg und anschließendem Abfall des Motorstroms l. Diese hier durchaus erheblichen Abweichungen von dem im Normalbetrieb erwarteten Soll-Verläufen v₀ und l₀ treten vorliegend in einem Zeitintervall von t₄-t₅ und damit entlang eines bestimmten Abschnitts entlang des zugelassenen Stellweges der Luftdurchlassvorrichtung 1 und entlang des zugelassenen Verstellwegs α des Abtriebselements 25 auf.

Die Steuereinheit 212 ist vorliegend dazu eingerichtet und vorgesehen, eine derartige Abweichung, wie sie in den Ist-Verläufen v₁ und l₁ der Figur 3B wiedergegeben ist, zu erkennen und dahingehend zu bewerten, dass die Sicherungsfunktion des Stellantriebs 2 ausgelöst wurde und folglich das Antriebsrad 23 nicht (mehr) mit dem Abtriebselement 25 gekoppelt ist. Dies wird als ein kritischer Betriebszustand bewertet, da hiermit Beeinträchtigungen der Funktion der Luftdurchlassvorrichtung 1 verbunden sein können.

Wird bei einer Verstellung der Luftdurchlassvorrichtung 1 anhand des Motorstroms I und/oder anhand der Drehzahl v eine Abweichung von einem in der Steuereinheit 212 hinterlegten Soll-Verlauf entsprechend der Figur 3B erkannt, kann die Steuereinheit 212 hierdurch auf das Vorliegen eines Betriebszustands schließen, bei dem das Antriebsrad 23 und das Abtriebselement 25 nicht bestimmungsgemäß unmittelbar miteinander gekoppelt sind und die Sicherungsfunktion des Stellantriebs 2 ausgelöst wurde. Aufgrund der Konstruktion des Stellantriebs 2 mit dem Antriebsrad 23, dem Abtriebselement 25 und dem die beiden Elemente starr koppelnden Übertragungselement 27 tritt eine detektierbare charakteristische Abweichung der Drehzahl v und des Motorstroms I stets an derselben Stelle entlang eines zugelassenen Stellwegs auf, das heißt, stets in demselben Bereich zwischen der geschlossenen und der offenen Stellung der Luftdurchlassvorrichtung 1. Folglich kann die Steuereinheit 212 bereits bei Überfahren lediglich eines Teilbereichs des zugelassenen Stellwegs der Luftdurchlassvorrichtung 1 anhand der erfassten Drehzahl v oder der erfassten Stärke des Motorstroms I erkennen, ob dieser als kritisch eingestufte Betriebszustand vorliegt.

Hat die Steuereinheit 212 vorliegend die Auslösung der Sicherungsfunktion des Stellantriebs 2 festgestellt, wechselt die Steuereinheit 212 in einen anderen Betriebsmodus, um automatisch und damit eventuell unabhängig oder sogar abweichend von Steuerungssignalen einer übergeordneten Steuerungseinrichtung für die Motorkühlung eine Verstellbewegung durch den Stellantrieb 2 ausführen zu lassen, mit der die festgestellte Fehlfunktion behebbar ist.

So veranlasst die Steuereinheit 212 den Antriebsmotor 211 der Antriebsvorrichtung 21 hier zu einer Reaktivierfahrt, mittels der eine (erneute) unmittelbare Kopplung des Antriebsrads 23 mit dem Abtriebselement 25 über das Übertragungselement 27 erreicht wird. Vorliegend wird hierfür die Luftdurchlassvorrichtung 1 in die offene Stellung verstellt, in der die Luftdurchlassvorrichtung 1 zum Durchlassen eines Luftstroms maximal geöffnet ist. Hierdurch werden die beiden Hebel 27A und 27B aus der Aussparung 261 des Stellelements 26 herausgeführt (vgl. Figur 2D), so dass wieder eine Abstützung des Übertragungselements 27 im Bereich seines Gelenks 272 durch das Stellelement 26 bereitgestellt werden kann und eine Verstellkraft auf das Antriebsrad 23 über das Übertragungselement 27 wieder unmittelbar an das Abtriebselement 25 übertragbar ist. Nach Abschluss der Reaktivierfahrt, das heißt, nach Koppeln des Antriebsrades 23 mit dem Abtriebselement 25, wechselt die Steuereinheit 212 wieder in den Normalbetrieb (ersten Betriebsmodus).

Auf diese Weise kann eine unbemerkte Funktionseinschränkung durch einen unerwünscht ausgelösten "Fail-safe"-Mechanismus des Stellantriebs 2 insbesondere ohne zusätzliche Schalter oder Sensoren, sondern ausschließlich anhand mindestens einer erfassten Betriebsgröße des Antriebsmotors 211, wie zum Beispiel der Drehzahl v oder dem Motorstrom I, erkannt werden. Durch zeitweises, d.h., zeitlich befristetes, Wechseln in einen anderen Betriebsmodus ist ferner eine Behebung der festgestellten Fehlfunktion möglich.

Darüber hinaus kann bei wiederholter Feststellung derselben Fehlfunktion durch die Steuereinheit 212 auf einen permanenten Defekt geschlossen werden und dies durch Ausgabe eines Fehlersignals, zum Beispiel an eine übergeordnete Steuerungseinrichtung angezeigt werden.

Anhand einer erfassten Betriebsgröße des Antriebsmotors 211 oder auch anhand mehrerer erfasster Betriebsgrößen können aber auch weitere Betriebszustände der

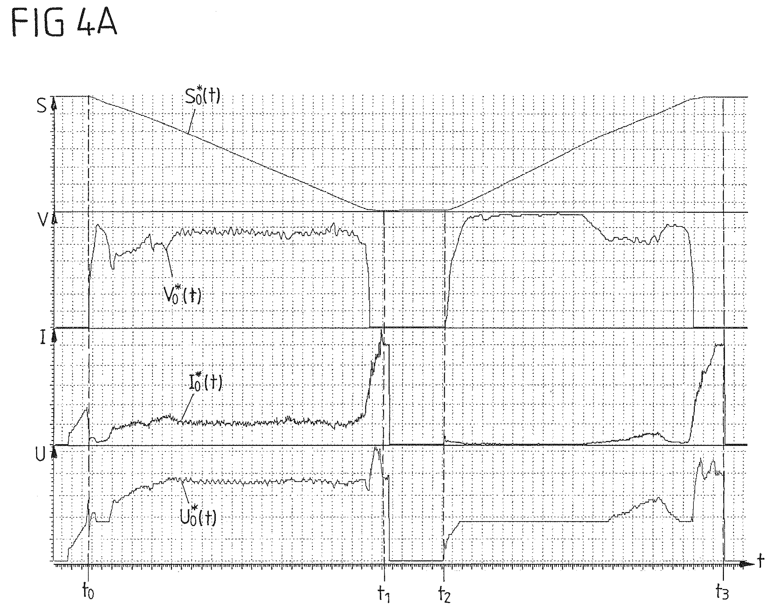

Luftdurchlassvorrichtung 1 zuverlässig erkannt werden. Dies ist anhand der Figuren 4A bis 4C veranschaulicht.

Hierbei zeigt die Figur 4A erneut beispielhaft Soll-Verläufe v₀*, l₀* und U₀* für die Drehzahl v, den Motorstrom l und eine Versorgungsspannung U des Antriebsmotors 211 bei Verstellung der Luftdurchlassvorrichtung 1 zwischen der offenen und geschlossenen Stellung. Auch hier sind durch die Zeitpunkte t₀ und t₃ jeweils das Vorliegen der Luftdurchlassvorrichtung 1 in der offenen Stellung gekennzeichnet und durch die Zeitpunkte t₁ und t₂ das Vorliegen der Luftdurchlassvorrichtung 1 in der geschlossenen Stellung. Ein hier zu den Diagrammen der Figur 3A geringfügig abweichender Verlauf der dargestellten Betriebsgrößen ergibt sich zum Beispiel durch die der jeweiligen Luftdurchlassvorrichtung 1 mit dem Stellantrieb 2 innewohnenden mechanischen Toleranzen.

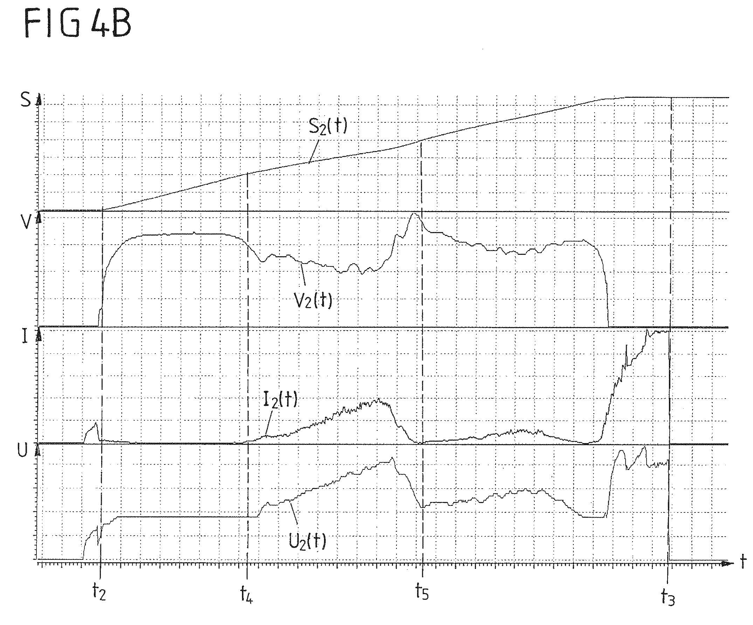

Mit der Figur 4B werden gemessene Ist-Verläufe v₂, l₂ und U₂ veranschaulicht, die in Analogie zu den Diagrammen der Figur 3B das Vorliegen der ausgelösten Sicherungsfunktion ("Fail-Safe"-Funktion) des Stellantriebs 2 anzeigen, wenn die Luftdurchlassvorrichtung 1 bestimmungsgemäß im Normalbetrieb in Richtung der offenen Stellung verstellt wird. Auch hier zeigen sich die bereits aus der Figur 3B bekannten charakteristischen Abweichungen im Verlauf der erfassten Betriebsgrößen v, l und U, wenn das Antriebsrad 23 nicht starr mit dem Abtriebselement 25 gekoppelt ist. Dies ist von der elektronischen Steuereinheit 212 auswertbar und wird von dieser zum Anlass genommen, in einen Betriebsmodus zu wechseln, in dem der Antriebsmotor abweichend vom Normalbetrieb angesteuert wird, um eine Reaktivierfahrt durchzuführen.

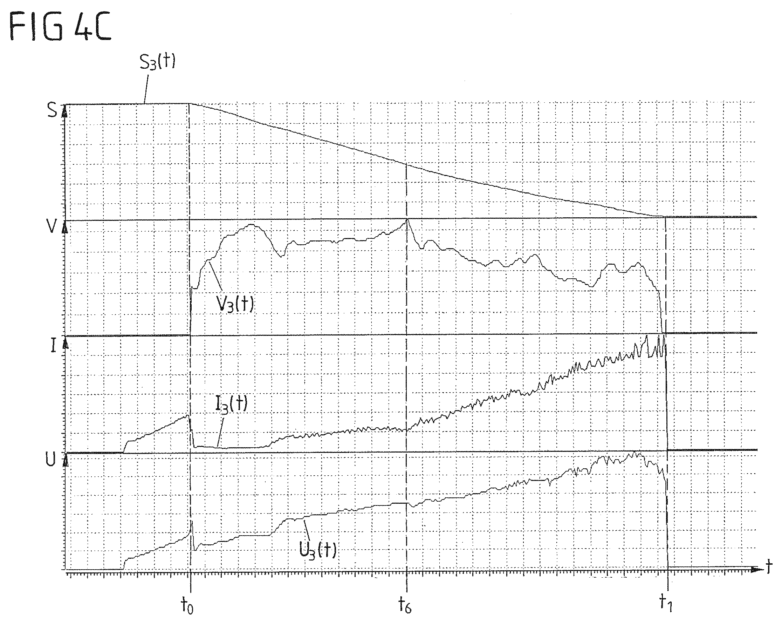

In der Figur 4C wird ein weiterer Betriebszustand beispielhaft aufgezeigt, der bereits anhand einer der von der Steuereinheit 212 erfassten und ausgewerteten Betriebsgröße v, I und U des Antriebsmotors 211 ohne zusätzliche Sensoren erkannt werden kann. So sind hier erfasste Ist-Verläufe v₃, l₃ und U₃ für die Drehzahl v, den Motorstrom I und die Versorgungsspannung U des Antriebsmotors 211 über der Zeit t während einer Verstellung der Luftdurchlassvorrichtung 1 von der offenen in die geschlossene Stellung aufgetragen. Hierbei ist zu erkennen, dass zu einem Zeitpunkt t₆ die Drehzahl v unerwartet, das heißt, - außerhalb zugelassener Toleranzen - abweichend vom Soll-Verlauf v₀ gemäß der Figur 4A, abfällt und der Motorstrom I sowie die Versorgungsspannung U unerwartet ansteigt, bis die Luftdurchlassvorrichtung 1 in der geschlossenen Stellung vorliegt.

Ein derartiger Ist-Verlauf einer Betriebsgrößen v, I, U lässt auf ein Hindernis im Stellweg der Luftdurchlassvorrichtung 1, insbesondere im Bereich ihrer Schließelemente schließen. Detektiert die elektronische Steuereinheit 212 eine derartige Abweichung von einem Soll-Verlauf v₀, l₀ oder Uₒ, bewertet die Steuereinheit 212 dies ebenfalls als einen (weiteren) kritischen Betriebszustand, in dem eine (andere) Fehlfunktion der Luftdurchlassvorrichtung 1 oder ihres Stellantriebs 2 vorliegt. Hierbei ist die Steuereinheit 212 folglich dazu eingerichtet und vorgesehen sein, anhand eines - in Bezug auf einen vorgegebenen Soll-Verlauf v₀ oder l₀ - unerwarteten und kontinuierlichen Abfalls der Drehzahl v der Antriebswelle 210 oder eines unerwarteten und kontinuierlichen Anstiegs des Motorstroms l vor Erreichen einer Endposition der Luftdurchlassvorrichtung 1 während einer Verstellung derselben in Richtung der geschlossenen Stellung auf ein Hindernis im Stellweg der Luftdurchlassvorrichtung zu schließen. Durch kurzfristiges Wechseln in einen anderen Betriebsmodus, indem beispielsweise eine Verstellbewegung der Luftdurchlassvorrichtung 1 in die entgegengesetzte Verstellrichtung ausgelöst wird, nach Ermittlung eines solchen kritischen Betriebszustandes kann das Risiko einer dauerhaften mechanischen Beschädigung der Luftdurchlassvorrichtung 1 minimiert oder sogar gänzlich ausgeschlossen werden. Hier wird der Antriebsmotor 211 folglich gestoppt und/oder eine Verstellbewegung durch den Antriebsmotor 211 automatisch reversiert, nachdem anhand des unerwarteten Anstiegs des Motorstroms I oder des unerwarteten Abfalls der Drehzahl v durch die Steuereinheit 212 auf ein Hindernis im Verstellweg geschlossen wurde.

Die elektronische Steuereinheit 212 des Stellantriebs 2 kann hier folglich eingerichtet und vorgesehen sein, anhand einer Betriebsgröße des Antriebsmotors 211, wie zum Beispiel dem Motorstrom I oder der Drehzahl v auf mehrere zueinander unterschiedliche Betriebszustände zu schließen und je nach festgestelltem Betriebszustand in einen anderen, von mehreren möglichen Betriebsmodi zu wechseln, um eine an dem jeweiligen Betriebszustand angepasste Verstellbewegung auszulösen oder bestimmte Verstellbewegungen zu unterbinden.

Bei einer Bewertung durch die Steuereinheit 212, ob ein bestimmter (kritischer) Betriebszustand vorliegt, können auch Temperaturwerte eines Temperatursensors 213 (vergleiche Figur 2A) einbezogen werden. Werden durch den Temperatursensor 213 beispielsweise (Außen-) Temperaturen unterhalb des Gefrierpunktes gemessen und gleichzeitig bei einer Schließbewegung der Luftdurchlassvorrichtung 1 ein Anstieg des Motorstroms I oder ein Abfall der Drehzahl v noch vor Erreichen der geschlossenen Stellung festgestellt, kann dies auf eine etwaige Vereisung hindeuten. Die Steuereinheit 212 bewertet dies dann dementsprechend als einen (dritten) Betriebszustand der Luftdurchlassvorrichtung 1, indem der Antriebsmotor 211 mit anderen Betriebsparametern angesteuert werden muss.

So kann hier beispielsweise vorgesehen sein, dass Verstellungen der Luftdurchlassvorrichtung (in Richtung der geschlossenen und/oder der offenen Stellung) für eine definierte Zeitdauer ausgeschlossen werden, also auch trotz entsprechender Steuersignale einer übergeordneten Steuerungseinrichtung ein Verstellung der Luftdurchlassvorrichtung 1 über den Antriebsmotor 211 nicht erfolgen kann. Eine Freigabe von Verstellbewegungen wird durch die Steuereinheit 212 zum Beispiel erst dann erfolgen, wenn eine Vereisung mit Sicherheit ausgeschlossen werden kann, beispielsweise wenn eine von dem Temperatursensor 213 an die Steuereinheit 212 übermittelte Temperatur - vorzugsweise für eine definierte Zeit - oberhalb einer Temperatur-Untergrenze und über dem Gefrierpunkt lag.

Ferner kann eine elektronische Steuereinheit 212 dazu eingerichtet und vorgesehen sein, dauerhaft in einen anderen Betriebsmodus zu wechseln, indem für die Verstellung der Luftdurchlassvorrichtung 1 veränderte Betriebsparameter für den Antriebsmotor 211 vorgegeben sind. So kann die Steuereinheit 212 insbesondere dazu in der Lage sein, adaptiv die vorzugebenden Betriebsparameter für die Verstellung der Luftdurchlassvorrichtung 1 in einem Normalbetrieb zu erlernen.

Hier kann ein erster Betriebsmodus durch die elektronische Steuereinheit 211 für das erstmalige Verfahren der Luftdurchlassvorrichtung 1 in die geschlossene und in die offene Stellung nach der Montage des Stellantriebs 2 vorgesehen sein. In diesem Betriebsmodus ist zunächst eine vergleichsweise geringe Verstellgeschwindigkeit der Antriebswelle 210 durch die Steuereinheit 212 vorgegeben, da in der elektronischen Steuereinheit 212 noch nicht (exakt) hinterlegt ist, nach welchem Stellweg s der Antriebswelle 210 ausgehend von der aktuellen Verstellposition die jeweilige Endposition der Luftdurchlassvorrichtung 1 erreicht ist. Durch Einfahren in die jeweilige Endposition mit überhöhter Verstellgeschwindigkeit könnte folglich eine mechanische Beschädigung der Luftdurchlassvorrichtung 1 und insbesondere etwaiger Schließelemente der Luftdurchlassvorrichtung 1 auftreten. Sind die Endpositionen der Luftdurchlassvorrichtung 1 anhand einer Betriebsgröße des Antriebsmotors 211 als unkritische Betriebszustände ermittelt, können hierauf basierend neue, veränderte Betriebsparameter für einen bestimmungsgemäßen Normalbetrieb durch die Auswertelogik der Steuereinheit 212 vorgegeben werden.

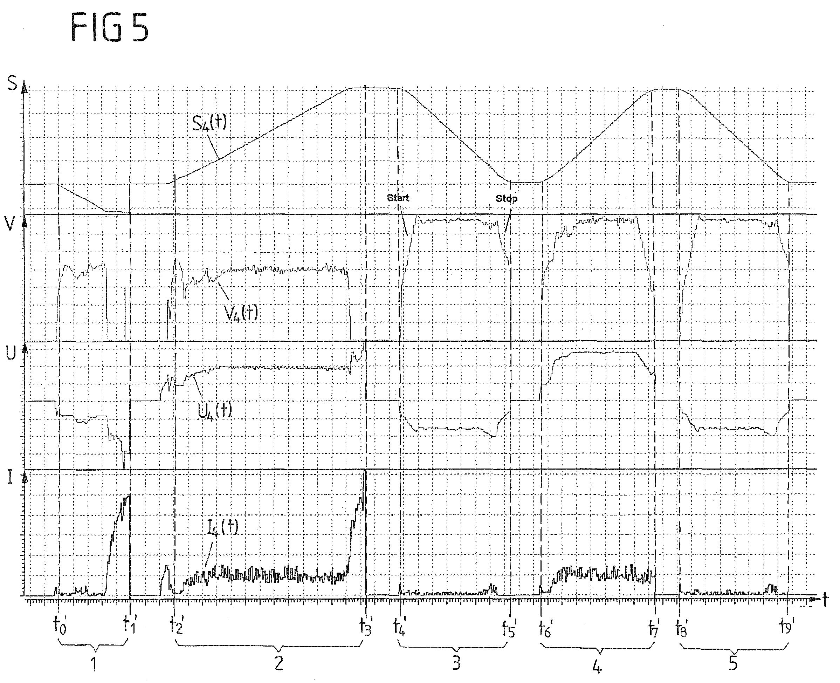

In der Figur 5 wird eine solche Veränderung der Betriebsparameter anhand von Diagrammen veranschaulicht, in denen erneut die Drehzahl v, die Versorgungsspannung U und der Motorstrom l sowie der Verstellweg s der Antriebswelle 210 über der Zeit t aufgetragen sind. Hierbei ist zu beachten, dass in dem Weg-Zeit-Diagramm der Figur 5 - und damit abweichend von den Diagrammen der Figuren 3A-3B und 4A-4C - eine Verstellung der Luftdurchlassvorrichtung 1 in die offene Stellung durch eine abfallende Gerade und eine Verstellung der Luftdurchlassvorrichtung 1 in Richtung der geschlossenen Stellung durch eine ansteigende Gerade veranschaulicht sind.

Bei einer erstmaligen Verstellung der Luftdurchlassvorrichtung 1 über den Antriebsmotor 211 in die offene Stellung - hier innerhalb des Zeitintervalls t₀'-t₁' (Abschnitt "1") - wird die Antriebswelle 210 mit zunächst vergleichsweise geringer Geschwindigkeit betrieben. Anhand eines abrupten Abfalls der Drehzahl v und/oder eines abrupten Anstiegs des Motorstroms l zum Zeitpunkt t₁' erkennt die elektronische Steuereinheit 212 das Erreichen einer Endposition der Luftdurchlassvorrichtung 1, in der eine weitere Verstellung in dieselbe Verstellrichtung nicht mehr möglich ist. Hierauf basierend werden die Betriebsparmeter für eine nachfolgende Verstellung in die offene Stellung dauerhaft geändert, so dass diese Verstellung zum Beispiel hinsichtlich der Geräuschentwicklung, des Verschleißes, der Verstellgeschwindigkeit und/oder der Leistungsaufnahme des Stellantriebs 2 optimiert ist. Dies kann insbesondere durch Anpassung eines vorgegebenen Drehzahl-Soll-Verlaufs für den Antriebsmotor 21 bei einer Verstellung der Luftdurchlassvorrichtung erreicht werden. So können für das Starten und Stoppen einer Verstellbewegung Drehzahlrampen durch die elektronische Steuereinheit 212 vorgegeben werden.

Eine Anpassung der Betriebsparameter wird bei der Ausführungsvariante der Figur 5 auch im Hinblick auf eine Verstellung der Luftdurchlassvorrichtung 1 in die geschlossene Stellung vorgenommen, nachdem die Luftdurchlassvorrichtung 1 erstmalig ausgehend von der offenen Stellung in die geschlossene Stellung innerhalb des Zeitintervalls t₂'-t₃' (Abschnitt "2") verstellt wurde.

Durch die von der Steuereinheit 212 im Anschluss an die beiden erstmaligen Verstellungen der Luftdurchlassvorrichtung 1 in die offene und in die geschlossene Stellung vorgenommenen Änderungen der Betriebsparameter, die den Betriebsmodus des Antriebsmotors 211 für den bestimmungsgemäßen Normalbetrieb definieren, verlaufen nachfolgende Verstellungen der Luftdurchlassvorrichtung 1 optimiert und an die mechanischen Verhältnisse der jeweiligen Luftdurchlassvorrichtung 1 angepasst ab. So weisen die in der Figur 5 ersichtlichen Verläufe v₄, U₄ und l₄ in Abschnitten "3", "4" und "5", die nachfolgende Verstellungen der Luftdurchlassvorrichtung 1 von der offenen in die geschlossene Stellung (Zeitintervall t₄'-t₅'), von der offenen in die geschlossene Stellung (Zeitintervall t₆'-t₇') und erneut von der geschlossenen in die offene Stellung (Zeitintervall t₈'-t₉') repräsentierten, einen gegenüber den Abschnitten "1" und "2" geänderten Soll-Verlauf der erfassten Betriebsgrößen v, U und l auf. So verläuft beispielsweise eine Verstellung grundsätzlich mit höherer Maximaldrehzahl und einer gezielten Abbremsung vor Erreichen der jeweiligen Endposition ab.

Bei den vorliegend erläuterten Ausführungsvarianten eines erfindungsgemäßen Stellantriebs sowie eines hiermit durchzuführenden erfindungsgemäßen Verfahrens zur elektronischen Steuerung eines Stellantriebs für eine Luftdurchlassvorrichtung 1 für die Motorkühlung eines Fahrzeugs F ist stets vorgesehen, Schwankungen der an dem Antriebsmotor 211 anliegenden (mechanischen) Last anhand mindestens einer Betriebsgröße, wie zum Beispiel der Drehzahl v oder dem Motorstrom I, zu erkennen und dahingehend auszuwerten, ob eine dauerhafte oder zumindest zeitweise Änderung der Betriebsparameter für Steuerung des Antriebsmotors notwendig ist. Hierdurch kann insbesondere eine situationsabhängige Drehzahlregelung realisiert werden, bei der in Abhängigkeit von einem ermittelten Betriebszustand dem Antriebsmotor 211 durch die elektronische Steuereinheit 212 eine bestimmte Aktion aufgezwungen wird - wie zum Beispiel die Erhöhung eines Antriebsmoments zur Überwindung von normalen Schwergängigkeiten, Stoppen oder Reversieren einer Verstellbewegung oder Entspannen eines Getriebes - und damit eine bestimmte Verstellbewegung der Luftdurchlassvorrichtung 1 abweichend von einem Normalbetrieb. Ebenso kann hierdurch in Abhängigkeit von dem ermittelten Betriebszustand in einen Betriebsmodus gewechselt werden, in dem gerade kritische Aktionen bzw. Verstellungen der Luftdurchlassvorrichtung 1 - weitere Ansteuerung mit hohem Antriebsmoment, ständiger Versuch des Öffnens/Schließens der Schließelemente der Luftdurchlassvorrichtung 1 bei Vereisung - durch die Steuereinheit 212 gezielt verhindert sind.

Dabei sind auftretende Lastschwankungen, die einen kritischen Betriebszustand mit einer vermuteten Fehlfunktion charakterisieren, vorzugsweise von Lastschwankungen unterscheidbar, die zum Beispiel durch Windlast und/oder normale Schwergängigkeiten und mechanische Toleranzen auftreten. Dies ist zum Beispiel durch Vorgabe entsprechender Toleranzbereiche für einen vorgegebenen Soll-Verlauf, in dem sich Abweichungen bewegen dürfen, ohne dass auf einen neuen (kritischen) Betriebszustand geschlossen wird, ohne Weiteres möglich. Die Größe derartiger, in der Steuereinheit hinterlegter Toleranzbereiche kann dabei selbstverständlich auch in Abhängigkeit von einer aktuellen Verstellposition der Luftdurchlassvorrichtung 1 variieren.

Durch die erfindungsgemäße Ausgestaltung eines Stellantriebs oder eines elektronischen Verfahrens zur Steuerung eines Stellantriebs für eine Durchlassvorrichtung einer Motorkühlung eines Fahrzeugs ist nicht nur eine einfache Diagnose von Fehlfunktionen, insbesondere anhand der Auswertung der erfassten und gespeicherten Werte der erfassten Betriebsgröße, gegeben einhergehend mit einer längeren Lebensdauer einer Luftdurchlassvorrichtung und des zugehörigen Stellantriebs, sondern es lässt sich auch die Performance einer Drehzahlregelung für den Antriebsmotor des Stellantriebs verbessern sowie eine Verstellcharakteristik des Antriebsmotors in einfacher Weise optimieren. Durch die Erkennung kritischer Schwergängigkeiten bei der Verstellung der Luftdurchlassvorrichtung und eine hieran angepasste Änderung der Betriebsparameter für den Antriebsmotor lässt sich zudem die Belastung von Mechanik und Antriebsmotor reduzieren und es ist ein robusterer Betrieb im Serieneinsatz auch unter extremen Bedingungen kostengünstig realisierbar. Zudem lassen sich etwaige Verstellbewegungen, die störende Geräusche im Betrieb mit sich bringen, klassifizieren und somit weitestgehend vermeiden.

### Bezugszeichenliste

- 1: Luftdurchlassvorrichtung
- 10: Lamellen
- 2: Stellantrieb
- 21: Antriebsvorrichtung
- 210: Antriebswelle
- 211: Antriebsmotor
- 212: Steuereinheit
- 22: Stecker
- 23: Antriebsrad
- 230: Verzahnung
- 231: Gleitfläche
- 232: Vorsprung
- 24: Aktuator
- 240: Elektrohubmagnet
- 241: Betätigungsstange
- 242: Feder
- 25: Abtriebselement
- 251: Befestigungsstelle
- 26: Stellelement
- 260: Mantelfläche
- 261: Aussparung
- 262: Hebelelement
- 27: Übertragungselement
- 270, 271: Gelenkstelle
- 272: Gelenk
- 27A, 27B: Hebel
- 28: Welle
- 3: Energieversorgungssystem
- A, A': Verdrehrichtung
- B, B': Richtung
- C: Richtung
- D: Drehachse
- F: Fahrzeug
- I: Motorstrom
- L: Luftstrom
- R: Motorraum
- s: Stellweg
- t₀ - t₆: Zeitpunkt
- U: Versorgungsspannung
- V: Spannung
- v: Drehzahl
- α: Verstellweg
- γ: Rückstellweg
- β: Abschnitt

## Patentansprüche

1. Stellantrieb für eine Luftdurchlassvorrichtung für eine Motorkühlung eines Fahrzeugs, mit
- einem Antriebsmotor (211) zur Verstellung der Luftdurchlassvorrichtung (1) zwischen einer offenen Stellung, in der die Luftdurchlassvorrichtung (1) zum Durchlassen eines Luftstroms (L) maximal geöffnet ist, und einer geschlossenen Stellung, in der die Luftdurchlassvorrichtung (1) zum Minimieren eines Luftstroms (L) geschlossen ist, und
- einer Steuereinheit (212) zur Steuerung des Antriebsmotors (211), in der Betriebsparameter für einen ersten Betriebsmodus des Antriebsmotors (211) hinterlegt sind, um die Luftdurchlassvorrichtung (1) bestimmungsgemäß zwischen der offenen und geschlossenen Stellung zu verstellen,
wobei
- der Stellantrieb (2) ein von dem Antriebsmotor (211) antreibbares Antriebselement (23) und ein entlang eines Verstellweges (α) mit dem Antriebselement (23) bewegbares Abtriebselement (25) zur Verstellung der Luftdurchlassvorrichtung (1) aufweist,
**dadurch gekennzeichnet, dass**
- das Antriebselement (23) und das Abtriebselement (25) zur Verstellung der Luftdurchlassvorrichtung (1) in einem Betriebszustand miteinander gekoppelt sind und in einem anderen Betriebszustand voneinander entkoppelt sind, so dass das Abtriebselement (25) relativ zu dem Antriebselement (23) bewegbar ist, und dass die Steuereinheit (212) dazu eingerichtet und vorgesehen ist,
- mindestens eine Betriebsgröße (I, U, v) des Antriebsmotors (211) während einer Verstellung der Luftdurchlassvorrichtung (1) zu erfassen und dahin gehend auswerten, ob ein Betriebszustand der Luftdurchlassvorrichtung (1) vorliegt, bei dem das Abtriebselement (25) mit dem Antriebselement (23) nicht gekoppelt ist, und
- bei Vorliegen dieses Betriebszustands den Antriebsmotor (211) für zumindest eine nachfolgende Verstellung der Luftdurchlassvorrichtung (1) in mindestens einem weiteren Betriebsmodus zu betreiben, in dem zu dem ersten Betriebsmodus unterschiedliche Betriebsparameter zur Steuerung des Antriebsmotors (211) vorgesehen sind.

2. Stellantrieb nach Anspruch 1, **dadurch gekennzeichnet, dass** die Steuereinheit (212) dazu eingerichtet und vorgesehen ist, nach Ermittlung des Betriebszustands, bei dem das Abtriebselement (25) mit dem Antriebselement (23) nicht gekoppelt ist, und/oder nach Ermittlung eines anderen Betriebszustands anhand der mindestens einen Betriebsgröße (I, U, v)
- den Antriebsmotor (211) für die Verstellung der Luftdurchlassvorrichtung (1) dauerhaft mit geänderten Betriebsparametern zu betreiben, und/oder
- den Antriebsmotor (211) zeitweise mit zu dem ersten Betriebsmodus unterschiedlichen Betriebsparametern zu betreiben.

3. Stellantrieb nach Anspruch 2, **dadurch gekennzeichnet, dass** in der Steuereinheit (212) für mindestens einen zweiten Betriebsmodus Betriebsparameter hinterlegt ist, um nach Ermittlung eines bestimmten Betriebszustandes bei einer Verstellung der Luftdurchlassvorrichtung (1) von dem ersten Betriebsmodus zeitweise in den zweiten Betriebsmodus zu wechseln.

4. Stellantrieb nach einem der vorhergehenden Ansprüche, **dadurch gekennzeichnet, dass** in der Steuereinheit (212) ein Soll-Verlauf für die mindestens eine Betriebsgröße (I, U, v) bei einer Verstellung der Luftdurchlassvorrichtung (1) in dem ersten Betriebsmodus hinterlegt ist und die Steuereinheit (212) dazu eingerichtet und vorgesehen ist, auszuwerten, ob eine Abweichung von dem für die Betriebsgröße (I, U, v) hinterlegten Soll-Verlauf aufgetreten ist.

5. Stellantrieb nach Anspruch 4, **dadurch gekennzeichnet, dass** die Steuereinheit (212) dazu ausgebildet und eingerichtet ist, den Ist-Verlauf (I(t), U(t), v(t)) der mindestens einen Betriebsgröße (I, U, v) während einer Verstellung der Luftdurchlassvorrichtung (1) zu erfassen und auszuwerten.

6. Stellantrieb nach Anspruch 5, **dadurch gekennzeichnet, dass** die Steuereinheit (212) dazu eingerichtet und vorgesehen ist, während einer durch den Antriebsmotor (211) verursachten Verstellung anhand der Abweichung eines gemessenen Ist-Verlaufs (I(t), U(t), v(t)) der mindestens einen erfassten Betriebsgröße von einem hinterlegten Soll-Verlauf zu bewerten, ob ein Betriebszustand der Luftdurchlassvorrichtung (1) vorliegt, bei dem das Abtriebselement (25) mit dem Antriebselement (23) nicht gekoppelt ist.

7. Stellantrieb nach dem Anspruch 3 und einem der Ansprüche 4 bis 6, **dadurch gekennzeichnet, dass** die Steuereinheit (212) dazu ausgebildet und eingerichtet ist, eine Abweichung vom Soll-Verlauf für die mindestens eine Betriebsgröße (I, U, v) als einen kritischen Betriebszustand der Luftdurchlassvorrichtung (1) zu bewerten, bei dem eine Fehlfunktion der Luftdurchlassvorrichtung (1) vorliegt, und den Antriebsmotor (211) automatisch in einem anderen Betriebsmodus zu betreiben, in dem eine Verstellung der Luftdurchlassvorrichtung (1) nur noch unter vorgegebenen Betriebsparametern möglich ist, die zu den Betriebsparametern des ersten Betriebsmodus, in dem von einer fehlerfreien Verstellbarkeit der Luftdurchlassvorrichtung (1) ausgegangen wird, unterschiedlich sind.

8. Stellantrieb nach Anspruch 7, **dadurch gekennzeichnet, dass** die Steuereinheit (212) dazu ausgebildet und eingerichtet ist, in dem anderen Betriebsmodus in Abhängigkeit von dem ermittelten Betriebszustand
- ein von dem Antriebsmotor (211) erzeugtes Antriebsmoment zu erhöhen,
- eine Verstellbewegung der Luftdurchlassvorrichtung (1) zu stoppen und eine Verstellung der Luftdurchlassvorrichtung (1) mittels des Antriebsmotors (211) zumindest zeitweise zu blockieren,
- eine Verstellung der Luftdurchlassvorrichtung (1) in Richtung der offenen oder geschlossenen Stellung zu stoppen und mittels des Antriebsmotors (211) die Luftdurchlassvorrichtung (1) in die entgegengesetzte Richtung zu verstellen und/oder
- mittels des Antriebsmotors (211) die Luftdurchlassvorrichtung (1) automatisch in die offene Stellung zu verstellen, in der die Luftdurchlassvorrichtung (1) maximal geöffnet ist.

9. Stellantrieb nach einem der vorhergehenden Ansprüche, **dadurch gekennzeichnet, dass**
- ein zwischen dem Antriebselement (23) und dem Abtriebselement (25) angeordnetes Übertragungselement (27) zum Herstellen einer Wirkverbindung zwischen dem Antriebselement (23) und dem Abtriebselement (25) vorgesehen ist sowie
- ein Aktuator (24), der derart mit dem Übertragungselement (27) zusammenwirkt, dass das Abtriebselement (25) in einer ersten Aktuatorstellung des Aktuators (24) zur Bewegung entlang des Verstellwegs (α) direkt mit dem Antriebselement (23) gekoppelt ist und in einer zweiten Aktuatorstellung des Aktuators (24) zumindest dann, wenn sich das Abtriebselement (25) in einem vorbestimmten Abschnitt (β) des Verstellwegs (α) befindet, relativ zu dem Antriebselement (23) bewegbar ist.

10. Stellantrieb nach einem der vorhergehenden Ansprüche, **dadurch gekennzeichnet, dass** die Steuereinheit (212) dazu ausgebildet und eingerichtet ist, die Stärke eines von dem Antriebsmotor (211) aufgenommenen elektrischen Stroms (I) und/oder die Höhe einer an dem Antriebsmotor (211) anliegenden Versorgungsspannung (U) und/oder eine Drehzahl (v) des Antriebsmotors (211) als Betriebsgröße während einer Verstellung der Luftdurchlassvorrichtung (1) zu erfassen und auszuwerten.

11. Stellantrieb nach einem der vorhergehenden Ansprüche, **dadurch gekennzeichnet, dass** die Steuereinheit (212) dazu ausgebildet und eingerichtet ist, mehrere voneinander unterschiedliche Betriebszustände der Luftdurchlassvorrichtung (1) anhand der mindestens einen erfassten Betriebsgröße (I, U, v) zu ermitteln, insbesondere anhand eines während einer Verstellung der Luftdurchlassvorrichtung (1) erfassten zeitlichen Verlaufs der mindestens einen Betriebsgröße (I(t), U(t), v(t)).

12. Stellantrieb nach einem der vorhergehenden Ansprüche, **dadurch gekennzeichnet, dass** die Steuereinheit (212) mit einem Temperatursensor (213) gekoppelt und ergänzend dazu ausgebildet und eingerichtet ist, für die Ermittlung, ob ein bestimmter Betriebszustand vorliegt, und/oder für die Steuerung einer nachfolgenden Verstellung der Luftdurchlassvorrichtung (1) zusätzlich eine durch den Temperatursensor (213) gemessene Temperatur auszuwerten.

13. Stellantrieb nach einem der vorhergehenden Ansprüche, soweit rückbezogen auf Anspruch 2, **dadurch gekennzeichnet, dass** die Steuereinheit (212) ergänzend dazu eingerichtet und vorgesehen ist,
- nach der Montage des Stellantriebs (2) das erstmalige Erreichen der offenen und/oder der geschlossenen Stellung der Luftdurchlassvorrichtung (1) in dem ersten Betriebsmodus anhand der mindestens einen erfassten Betriebsgröße (I, U, v) jeweils als einen Betriebszustand zu erkennen, bei dem die Luftdurchlassvorrichtung (1) nicht weiter verstellbar ist, und
- die Betriebsparameter des Antriebsmotors (211) in Abhängigkeit von der festgestellten Stellung der Luftdurchlassvorrichtung (1) dauerhaft so zu ändern, dass eine nachfolgende Verstellung der Luftdurchlassvorrichtung (1) in Richtung der offenen oder geschlossenen Stellung hinsichtlich der Geräuschentwicklung, des Verschleißes, der Verstellgeschwindigkeit und/oder der Leistungsaufnahme des Stellantriebs (2) optimiert ist.

14. Verfahren zur elektronischen Steuerung eines Antriebsmotors eines Stellantriebs für eine Luftdurchlassvorrichtung einer Motorkühlung eines Fahrzeugs, insbesondere eines Stellantriebs nach einem der Ansprüche 1 bis 13, bei dem ein Antriebsmotor (211) zur Verstellung der Luftdurchlassvorrichtung (1) zwischen einer offenen Stellung, in der die Luftdurchlassvorrichtung (1) zum Durchlassen eines Luftstroms (L) maximal geöffnet ist, und einer geschlossenen Stellung, in der die Luftdurchlassvorrichtung (1) zum Minimieren eines Luftstroms (L) geschlossen ist, in einem ersten Betriebsmodus betrieben wird, wobei
- der Stellantrieb (2) ein von dem Antriebsmotor (211) antreibbares Antriebselement (23) und ein entlang eines Verstellweges (α) mit dem Antriebselement (23) bewegbares Abtriebselement (25) zur Verstellung der Luftdurchlassvorrichtung (1) aufweist,
**dadurch gekennzeichnet, dass**
- das Antriebselement (23) und das Abtriebselement (25) zur Verstellung der Luftdurchlassvorrichtung (1) in einem Betriebszustand miteinander gekoppelt sind und in einem anderen Betriebszustand voneinander entkoppelt sind, so dass das Abtriebselement (25) relativ zu dem Antriebselement (23) bewegbar ist,
- mindestens eine Betriebsgröße (I, U, v) des Antriebsmotors (211) während einer Verstellung der Luftdurchlassvorrichtung (1) in dem ersten Betriebsmodus erfasst und dahin gehend auswertet wird, ob ein Betriebszustand der Luftdurchlassvorrichtung (1) vorliegt, bei dem das Abtriebselement (25) mit dem Antriebselement (23) nicht gekoppelt ist, und
- bei Vorliegen dieses Betriebszustands der Antriebsmotor (211) für zumindest eine nachfolgende Verstellung der Luftdurchlassvorrichtung (1) in mindestens einem weiteren Betriebsmodus betrieben wird, in dem zu dem ersten Betriebsmodus unterschiedliche Betriebsparameter zur Steuerung des Antriebsmotors (211) vorgesehen sind.

15. Verfahren nach Anspruch 14, **dadurch gekennzeichnet, dass** nach Ermittlung des Betriebszustands, bei dem das Abtriebselement (25) mit dem Antriebselement (23) nicht gekoppelt ist, und/oder nach Ermittlung eines anderen Betriebszustands anhand der mindestens einen Betriebsgröße (I, U, v)
- der Antriebsmotor (211) für die Verstellung der Luftdurchlassvorrichtung (1) dauerhaft mit geänderten Betriebsparametern betrieben wird, und/oder
- der Antriebsmotor (211) zeitweise mit zu dem ersten Betriebsmodus unterschiedlichen Betriebsparametern betrieben wird.

## Claims

1. An actuating drive for an air passage apparatus for engine cooling in a vehicle, comprising
- a drive motor (211) for adjusting the air passage apparatus (1) between an open position in which the air passage apparatus (1) is maximally open for passage of an air stream (L) and a closed position in which the air passage apparatus (1) is closed so as to minimize an air stream (L), and
- a control unit (212) for controlling the drive motor (211), in which control unit (212) are stored operating parameters for a first operating mode of the drive motor (211), in order to adjust the air passage apparatus (1) between the open and closed position, as intended,
wherein
- the actuating drive (2) has a drive element (23) which is drivable by the drive motor (211) and a driven element (25) movable along an adjustment path (α) with the drive element (23) for adjusting the air passage apparatus (1),
**characterized in that**
- the drive element (23) and the driven element (25) are coupled together in an operating state for adjusting the air passage apparatus (1), and are decoupled from each other in another operating state, whereby the driven element (25) is movable with respect to the drive element (23), and
- the control unit (212) is designed and configured such that
- at least one operating variable (l, U, v) of the drive motor (211) can be determined during an adjustment of the air passage apparatus (1), and an evaluation can be made whether the air passage apparatus (1) is in an operating state in which the driven element (25) is decoupled from the drive element (23), and
- if such an operating state is present, the drive motor (211) is operated in at least one additional operating mode, for at least one subsequent adjustment of the air passage apparatus (1), wherein different operating parameters are provided for controlling the drive motor (23), said operating parameters being different from those in the first operating mode.

2. An actuating drive according to claim 1, **characterized in that** the control unit (212) is designed and configured such that, after determination of the operating state in which the driven element (25) is decoupled from the drive element (23), and/or after determination of another operating state, with the aid of at least one operating variable (l, U, v),
- to operate the drive motor (211) for the adjustment of the air passage apparatus (1) permanently with changed operating parameters, and/or
- to operate the drive motor (211) for a period of time with operating parameters which are different from those in the first operating mode.

3. An actuating drive according to claim 2, **characterized in that** operating parameters are stored in the control unit (212) for at least one second operating mode, so that, after determination of a particular operating state, a temporary switch may be made from the first operating mode to the second operating mode, in an adjustment of the air passage apparatus (1).

4. An actuating drive according to one of the preceding claims, **characterized in that** a nominal course for the at least one operating variable (l, U, v) for adjusting the air passage apparatus (1) in the first operating mode is stored in the control unit (212), and the control unit (212) is designed and configured so as to evaluate whether a deviation from the nominal course stored for the operating variable (l, U, v) is present.

5. An actuating drive according to claim 4, **characterized in that** the control unit (212) is designed and configured so as to determine and evaluate the actual course ((l(t), U(t), v(t)) of the at least one operating variable (l, U, v), during an adjustment of the air passage apparatus (1).

6. An actuating drive according to claim 5, **characterized in that** the control unit (212) is designed and configured so that, during an adjustment brought about by the drive motor (211), the control unit can evaluate whether an operating state of the air passage apparatus (1) is present wherewith the driven element (25) is decoupled from the drive element (23), with the aid of the deviation of a determined actual curve (l(t), U(t), v(t)) of the at least one determined operating variable from a stored nominal course.

7. An actuating drive according to claim 3 and one of claims 4 to 6, **characterized in that** the control unit (212) is designed and configured so that it can evaluate a deviation from the nominal course of the at least one operating variable (l, U, v) as a critical operating state of the air passage apparatus (1), wherein a malfunction of the air passage apparatus (1) is present, and so that said control unit (212) can operate the drive motor (211) automatically in another operating mode, in which adjustment of the air passage apparatus (1) is only possible with prescribed operating parameters which are different from the operating parameters of the first operating mode, in which it is assumed that the adjustability of the air passage apparatus (1) is error-free.

8. An actuating drive according to claim 7, **characterized in that** the control unit (212) is designed and configured such that, in the other operating mode, depending on the determined operating state,
- it increases a drive torque produced by the drive motor (211);
- it stops an adjusting movement of the air passage apparatus (1) and at least temporarily blocks adjustment of the air passage apparatus (1) by means of the drive motor (211);
- it stops an adjustment of the air passage apparatus (1) in the direction of the open or closed position, and adjusts the air passage apparatus (1) in the opposite direction by means of the drive motor (211), and/or
- it automatically adjusts the air passage apparatus (1) into the open position in which the air passage apparatus (1) is maximally open, by means of the drive motor (211).

9. An actuating drive according to one of the preceding claims, **characterized in that**
- a transmission element (27) disposed between the drive element (23) and the driven element (25) for establishing an operative connection between the drive element (23) and the driven element (25) is provided, and
- an actuator (24) which interacts with the transmission element (27) such that, in a first actuator position of the actuator (24), the driven element (25) is directly coupled to the drive element (23), for movement along the adjustment path (α), and in a second actuator position of the actuator (24), the driven element (25) is movable relative to the drive element (23), at least when the driven element (25) is disposed in a prescribed segment (ß) of the adjustment path (α).

10. An actuating drive according to one of the preceding claims, **characterized in that** the control unit (212) is designed and configured such that it can determine and evaluate the strength of an electric current (I) consumed by the drive motor (211), and/or the level of a supply voltage (U) applied to the drive motor (211), and/or a rotational speed (v) of the drive motor (211), as an operating variable during an adjustment of the air passage apparatus (1).

11. An actuating drive according to one of the preceding claims, **characterized in that** the control unit (212) is designed and configured such that it can determine a plurality of different operating states of the air passage apparatus (1), with the aid of the at least one determined operating variable (l, U, v), particularly with the aid of the timewise course of the at least one operating variable (I(t), U(t), v(t)) during an adjustment of the air passage apparatus (1).

12. An actuating drive according to one of the preceding claims, **characterized in that** the control unit (212) is coupled to a temperature sensor (213), and is designed and configured to determine whether a particular operating state is present, and/or to additionally evaluate a temperature measured by the temperature sensor (213) for the control of a subsequent adjustment of the air passage apparatus (1).

13. An actuating drive according to one of the preceding claims, insofar as they relate back to claim 2, **characterized in that** the control unit (212) is additionally designed and configured such that
- after the mounting of the actuating drive (2), it can determine first attainment of the open and/or the closed position of the air passage apparatus (1), in the first operating mode, with the aid of the at least one determined operating variable (l, U, v), and can recognize this position as an operating state in which the air passage apparatus (1) cannot be further adjusted; and
- it can permanently change the operating parameters of the drive motor (211) depending on the determined position of the air passage apparatus (1), such that a subsequent adjustment of the air passage apparatus (1) in the direction of the open or closed position will be optimized with regard to noise generation, wear, adjustment speed, and/or power consumption of the actuating drive (2).

14. Method for the electronic control of a drive motor of an actuating drive for an air passage apparatus for engine cooling of a vehicle, particularly an actuating drive according to one of claims 1 to 13, wherein a drive motor (211) for adjustment the air passage apparatus (1) between an open position in which the air passage apparatus (1) for passage of an air stream (L) is maximally open and a closed position in which the air passage apparatus (1) is closed, to minimize the air stream (L), is operated in a first operating mode; wherein
- the actuating drive (2) has a drive element (23) which is drivable by the drive motor (211) and driven element (25) which is movable with the drive element (23) along an adjustment path (α), for adjusting the air passage apparatus (1);
**characterized in that**
- the drive element (23) and the driven element (25) are coupled together for adjusting the air passage apparatus (1), in one operating state, and in another operating state they are decoupled from each other, so that the driven element (25) is movable relative to the drive element (23);
- at least one operating variable (l, U, v) of the drive motor (211) is determined during an adjustment of the air passage apparatus (1), in the first operating mode, and an evaluation is made of whether an operating state of the air passage apparatus (1) is present in which the driven element (25) is decoupled from the drive element (23); and
- when such an operating state is present, the drive motor (211) is operated in at least one additional operating mode, for at least one subsequent adjustment of the air passage apparatus (1), wherewith in said additional operating mode operating parameters which are different from those in the first operating mode are provided, for control of the drive motor (211).

15. Method according to claim 14, **characterized in that**, after the determination of the operating state in which the driven element (25) is decoupled from the drive element (23), and/or after determination of another operating state, with the aid of the at least one operating variable (l, U, v),
- the drive motor (211) for adjusting the air passage apparatus (1) is permanently operated with changed operating parameters; and/or
- the drive motor (211) is temporarily operated with operating parameters which are different from those of the first operating mode.

## Revendications

1. Commande d'actionnement pour un dispositif de passage d'air pour le refroidissement du moteur d'un véhicule, avec
- un moteur d'entraînement (211) pour le réglage du dispositif de passage d'air (1) entre une position ouverte, dans laquelle le dispositif de passage d'air (1) est ouvert au maximum pour le passage d'un courant d'air (L), et une position fermée, dans laquelle le dispositif de passage d'air (1) est fermé pour minimiser un courant d'air (L), et
- une unité de commande (212) pour la commande du moteur d'entraînement (211), dans laquelle des paramètres de fonctionnement sont enregistrés pour un premier mode de fonctionnement du moteur d'entraînement (211) afin de régler le dispositif de passage d'air (1) selon son usage prévu entre la position ouverte et fermée,
- la commande d'actionnement (2) présentant un élément d'entraînement (23) entraînable par le moteur d'entraînement (211) et un élément de sortie (25) mobile le long d'une course de réglage (α) avec l'élément d'entraînement (23) pour le réglage du dispositif de passage d'air (1),
**caractérisé en ce que**
- l'élément d'entraînement (23) et l'élément de sortie (25) sont couplés l'un à l'autre pour le réglage du dispositif de passage d'air (1) dans un état de fonctionnement et sont découplés l'un de l'autre dans un autre état de fonctionnement de sorte que l'élément de sortie (25) soit mobile par rapport à l'élément d'entraînement (23), et **en ce que** l'unité de commande (212) est aménagée et prévue afin de
- détecter au moins une grandeur de fonctionnement (I, U, v) du moteur d'entraînement (211) pendant un réglage du dispositif de passage d'air (1) et d'évaluer à partir de celle-ci si un état de fonctionnement du dispositif de passage d'air (1) se présente, dans lequel l'élément de sortie (25) n'est pas couplé à l'élément d'entraînement (23), et
- en présence de cet état de fonctionnement, faire fonctionner le moteur d'entraînement (211) pour au moins un réglage suivant du dispositif de passage d'air (1) dans au moins un autre mode de fonctionnement, dans lequel des paramètres de fonctionnement différents du premier mode de fonctionnement sont prévus pour la commande du moteur d'entraînement (211).

2. Commande d'actionnement selon la revendication 1, **caractérisé en ce que** l'unité de commande (212) est aménagée et prévue afin de faire fonctionner après la détermination de l'état de fonctionnement, dans lequel l'élément de sortie (25) n'est pas couplé à l'élément d'entraînement (23) et/ou après la détermination d'un autre état de fonctionnement à l'aide de l'au moins une grandeur de fonctionnement (I, U, v),
- le moteur d'entraînement (211) pour le réglage du dispositif de passage d'air (1) durablement avec des paramètres de fonctionnement modifiés et/ou
- le moteur d'entraînement (211) temporairement avec des paramètres de fonctionnement différents du premier mode de fonctionnement.

3. Commande d'actionnement selon la revendication 2, **caractérisé en ce que** des paramètres de fonctionnement sont enregistrés dans l'unité de commande (212) pour au moins un second mode de fonctionnement afin de passer, après la détermination d'un état de fonctionnement déterminé lors d'un réglage du dispositif de passage d'air (1), du premier mode de fonctionnement temporairement dans le second mode de fonctionnement.

4. Commande d'actionnement selon l'une quelconque des revendications précédentes, **caractérisé en ce qu'**une allure de consigne pour l'au moins une grandeur de fonctionnement (I, U, v) est enregistrée dans l'unité de commande (212) lors d'un réglage du dispositif de passage d'air (1) dans le premier mode de fonctionnement et l'unité de commande (212) est aménagée et prévue afin d'évaluer si un écart par rapport à l'allure de consigne enregistrée pour la grandeur de fonctionnement (I, U, v) est survenu.

5. Commande d'actionnement selon la revendication 4, **caractérisé en ce que** l'unité de commande (212) est réalisée et aménagée afin de détecter et d'évaluer l'allure réelle (I(t), U(t), v(t)) de l'au moins une grandeur de fonctionnement (I, U, v) pendant un réglage du dispositif de passage d'air (1).

6. Commande d'actionnement selon la revendication 5, **caractérisé en ce que** l'unité de commande (212) est aménagée et prévue afin d'évaluer pendant un réglage causé par le moteur d'entraînement (211) à l'aide de l'écart d'une allure réelle mesurée (I(t), U(t), v(t)) de l'au moins une grandeur de fonctionnement détectée par rapport à une allure de consigne enregistrée si un état de fonctionnement du dispositif de passage d'air (1) se présente, dans lequel l'élément de sortie (25) n'est pas couplé à l'élément d'entraînement (23).

7. Commande d'actionnement selon la revendication 3 et l'une quelconque des revendications 4 à 6, **caractérisé en ce que** l'unité de commande (212) est réalisée et aménagée afin d'évaluer un écart par rapport à l'allure de consigne pour l'au moins une grandeur de fonctionnement (I, U, v) comme état de fonctionnement critique du dispositif de passage d'air (1), dans lequel une fonction erronée du dispositif de passage d'air (1) se présente, et de faire fonctionner le moteur d'entraînement (211) automatiquement dans un autre mode de fonctionnement, dans lequel un réglage du dispositif de passage d'air (1) n'est encore possible que dans des paramètres de fonctionnement prescrits qui sont différents des paramètres de fonctionnement du premier mode de fonctionnement, dans lequel il est parti d'une possibilité de réglage sans erreur du dispositif de passage d'air (1).

8. Commande d'actionnement selon la revendication 7, **caractérisé en ce que** l'unité de commande (212) est réalisée et aménagée afin
- d'augmenter un couple d'entraînement généré par le moteur d'entraînement (211),
- d'arrêter un mouvement de réglage du dispositif de passage d'air (1) et de bloquer au moins temporairement un réglage du dispositif de passage d'air (1) à l'aide du moteur d'entraînement (211),
- d'arrêter un réglage du dispositif de passage d'air (1) en direction de la position ouverte ou fermée et de régler à l'aide du moteur d'entraînement (211) le dispositif de passage d'air (1) dans la direction opposée et/ou
- de régler automatiquement à l'aide du moteur d'entraînement (211) le dispositif de passage d'air (1) dans la position ouverte, dans laquelle le dispositif de passage d'air (1) est ouvert au maximum,
dans l'autre mode de fonctionnement en fonction de l'état de fonctionnement déterminé.

9. Commande d'actionnement selon l'une quelconque des revendications précédentes, **caractérisé en ce que**
- un élément de transmission (27) agencé entre l'élément d'entraînement (23) et l'élément de sortie (25) pour l'établissement d'une liaison active entre l'élément d'entraînement (23) et l'élément de sortie (25) est prévu ainsi que
- un actionneur (24) qui coagit avec l'élément de transmission (27) de telle manière que l'élément de sortie (25) soit couplé directement dans une première position d'actionneur de l'actionneur (24) pour le déplacement le long de la course de déplacement (α) avec l'élément d'entraînement (23) et dans une seconde position d'actionneur de l'actionneur (24) au moins lorsque l'élément de sortie (25) se trouve dans une section prédéterminée (β) de la course de réglage (α), soit mobile par rapport à l'élément d'entraînement (23).

10. Commande d'actionnement selon l'une quelconque des revendications précédentes, **caractérisé en ce que** l'unité de commande (212) est réalisée et aménagée afin de détecter et d'évaluer l'intensité d'un courant (I) électrique reçu par le moteur d'entraînement (211) et/ou la hauteur d'une tension d'alimentation (U) appliquée au moteur d'entraînement (211) et/ou une vitesse de rotation (v) du moteur d'entraînement (211) comme grandeur de fonctionnement pendant un réglage du dispositif de passage d'air (1).

11. Commande d'actionnement selon l'une quelconque des revendications précédentes, **caractérisé en ce que** l'unité de commande (212) est réalisée et aménagée afin de déterminer plusieurs états de fonctionnement différents l'un de l'autre du dispositif de passage d'air (1) à l'aide de l'au moins une grandeur de fonctionnement détectée (I, U, v), en particulier à l'aide d'une allure temporelle détectée pendant un réglage du dispositif de passage d'air (1) de l'au moins une grandeur de fonctionnement (I(t), U(t), v(t)).

12. Commande d'actionnement selon l'une quelconque des revendications précédentes, **caractérisé en ce que** l'unité de commande (212) est couplée à un capteur de température (213) et est réalisée et aménagée en complément de cela pour déterminer si un état de fonctionnement déterminé est présent, et/ou d'évaluer en outre une température mesurée par le capteur de température (213) pour la commande d'un réglage suivant du dispositif de passage d'air (1).

13. Commande d'actionnement selon l'une quelconque des revendications précédentes, dans la mesure où elle est relative à la revendication 2, **caractérisé en ce que** l'unité de commande (212) est aménagée et prévue en en outre afin de
- détecter après le montage de la commande d'actionnement (2) la première atteinte de la position ouverte et/ou de la position fermée du dispositif de passage d'air (1) dans le premier mode de fonctionnement à l'aide de l'au moins une grandeur de fonctionnement détectée (I, U, v) respectivement comme un état de fonctionnement, pour lequel le dispositif de passage d'air (1) n'est pas plus réglable et
- de modifier durablement les paramètres de fonctionnement du moteur d'entraînement (211) en fonction de la position fixée du dispositif de passage d'air (1) de sorte qu'un réglage suivant du dispositif de passage d'air (1) soit optimisé en direction de la position ouverte ou fermée en ce qui concerne le développement de bruit, l'usure, la vitesse de réglage et/ou la puissance absorbée de la commande d'actionnement (2).

14. Procédé de commande électronique d'un moteur d'entraînement d'une commande d'actionnement pour un dispositif de passage d'air d'un refroidissement de moteur d'un véhicule, en particulier d'une commande d'actionnement selon l'une quelconque des revendications 1 à 13, pour lequel un moteur d'entraînement (211) fonctionne dans un premier mode de fonctionnement pour le réglage du dispositif de passage d'air (1) entre une position ouverte, dans laquelle le dispositif de passage d'air (1) est ouvert au maximum pour le passage d'un courant d'air (L), et une position fermée, dans laquelle le dispositif de passage d'air (1) est fermé pour la réduction d'un courant d'air (L),
- la commande d'actionnement (2) présentant un élément d'entraînement (23) entraînable par le moteur d'entraînement (211) et un élément de sortie (25) mobile le long d'une course de réglage (α) avec l'élément d'entraînement (23) pour le réglage du dispositif de passage d'air (1),
**caractérisé en ce que**
- l'élément d'entraînement (23) et l'élément de sortie (25) sont couplés l'un à l'autre pour le réglage du dispositif de passage d'air (1) dans un état de fonctionnement et sont découplés l'un de l'autre dans un autre état de fonctionnement de sorte que l'élément de sortie (25) soit mobile par rapport à l'élément d'entraînement (23),
- au moins une grandeur de fonctionnement (I, U, v) du moteur d'entraînement (211) est détectée pendant un réglage du dispositif de passage d'air (1) dans le premier mode de fonctionnement et il est évalué à partir de celle-ci si un état de fonctionnement du dispositif de passage d'air (1) se présente, dans lequel l'élément de sortie (25) n'est pas couplé à l'élément d'entraînement (23) et
- en présence de cet état de fonctionnement, le moteur d'entraînement (211) pour au moins un réglage suivant du dispositif de passage d'air (1) fonctionne dans au moins un autre mode de fonctionnement, dans lequel des paramètres de fonctionnement différents du premier mode de fonctionnement sont prévus pour la commande du moteur d'entraînement (211).

15. Procédé selon la revendication 14, **caractérisé en ce qu'**après la détermination de l'état de fonctionnement, dans lequel l'élément de sortie (25) n'est pas couplé à l'élément d'entraînement (23) et/ou après la détermination d'un autre état de fonctionnement à l'aide de l'au moins une grandeur de fonctionnement (I, U, v),
- le moteur d'entraînement (211) fonctionne pour le réglage du dispositif de passage d'air (1) durablement avec des paramètres de fonctionnement modifiés et/ou
- le moteur d'entraînement (211) fonctionne temporairement avec des paramètres de fonctionnement différents du premier mode de fonctionnement.
